# EUROPEAN PATENT APPLICATION

(11) **EP 4 312 064 A1**
(43) Date of publication of application: **31.01.2024**
(21) Application number: 23184679.1
(22) Date of filing: 11.07.2023
(51) Int. Cl.: G02B 3/08, G02B 27/01

(54) **REFLECTIVE FRESNEL FOLDED OPTIC DISPLAY**

(30) Priority: 26.07.2022 US 202217874002
(71) Applicant: Meta Platforms Technologies, LLC, Menlo Park, CA 94025 (US)
(72) Inventor: OUDERKIRK, Andrew John, Menlo Park, 94025 (US); DIAZ, Liliana Ruiz, Menlo Park, 94025 (US); GENG, Ying, Menlo Park, 94025 (US); NOBLE, Hannah Dustan, Menlo Park, 94025 (US)
(74) Representative: Murgitroyd & Company

(57) **Abstract**

An example apparatus may include a display and an optical configuration configured to provide an image of a display, for example, in a head-mounted device. An example apparatus may include a display, a first lens assembly including a lens and a reflector, and a second lens assembly including a second lens and a second reflector. In some examples, the first lens assembly has a front surface configured to receive display light from the display when the display is energized. The first lens assembly may include a Fresnel surface (e.g., a Fresnel surface including facets and steps) that may, for example, be formed in a lens surface, or in the surface of a substrate supported by a lens surface. Other devices, methods, systems and computer-readable media are also disclosed.

## Description

### TECHNICAL FIELD

The present disclosure is generally directed to apparatus, methods and systems that may be used to provide images and image elements as part of a virtual or augmented reality view.

### BACKGROUND

Compact pancake or folded optic lenses may be thinner than comparable single-pass display optics, but may add substantial weight to an apparatus. Reducing weight is desirable for wearable devices such as a head-mounted display (HMD). In some optical configurations, an optical configuration including compact folded optics may lead to non-uniform image brightness, such as a visually perceptible reduction in image brightness within peripheral regions of the field of view.

### SUMMARY

According to a first aspect, there is provided an apparatus comprising: a display; a first lens assembly comprising a first lens and first reflector; and a second lens assembly comprising a second lens and a second reflector; wherein: the first lens assembly has a front surface configured to receive display light from the display when the display is energized; and the first lens assembly includes a Fresnel surface comprising facets and steps formed in the front surface of the first lens or in a substrate supported by the first lens.

The first lens assembly may have a rear surface facing the second lens assembly. The first lens assembly may further comprise an optical retarder supported by the rear surface.

The first lens may comprise a first Fresnel lens including the Fresnel surface. The first lens assembly may further comprise a second Fresnel lens. The first reflector may be located between the first Fresnel lens and the second Fresnel lens.

The first reflector may be disposed on the facets of the Fresnel surface of the first Fresnel lens.

The first reflector may comprise a polarized reflector or a beamsplitter.

The second reflector may comprise a polarized reflector or a beamsplitter.

The apparatus may be configured so that: the display light is transmitted through the first lens assembly; reflected by the second reflector to the first lens assembly; and reflected by the first reflector through the second lens assembly.

The front surface of the first lens may include a curved surface. The first reflector may be supported by the curved surface of the first lens.

The Fresnel surface may be formed in at least a portion of the curved surface.

The Fresnel surface may be formed within a central portion of the curved surface.

The curved surface may be an aspheric surface.

The Fresnel surface may be formed in a Fresnel substrate attached to the curved surface of the first lens.

The first reflector may extend between the curved surface of the first lens and the Fresnel substrate adhered to the curved surface of the first lens.

The Fresnel substrate may have a planar front surface in which the Fresnel surface is formed. The Fresnel substrate may have a concave rear surface that conforms to the curved surface of the first lens.

The apparatus may comprise a head-mounted device. The display light may form an image at an eye of a user when the user wears the head-mounted device. The head-mounted device may be an augmented-reality device. The head-mounted device may be a virtual-reality device.

According to a second aspect, there is provided a lens assembly, comprising: a lens having a convex surface; a reflector supported by the convex surface; a Fresnel substrate having a concave surface that conforms to and is supported by the convex surface of the lens, and is located so that the reflector is located between the convex surface of the lens and the convex surface of the Fresnel substrate; and a Fresnel surface formed in at least a portion of the Fresnel substrate, the Fresnel surface comprising facets and steps.

According to a third aspect, there is provided a method, comprising: emitting display light from a display; transmitting the display light through a first lens assembly comprising a Fresnel lens and a first reflector; reflecting the display light from a second lens assembly comprising a second reflector; and reflecting the display light from the first reflector so that the display light passes through the second lens assembly, wherein: the first reflector is located on a plurality of facets of the Fresnel lens.

The method may further comprise forming an augmented reality image or a virtual reality image using the display light.

### BRIEF DESCRIPTION OF THE DRAWINGS

The accompanying drawings illustrate a number of examples and are a part of the specification. Together with the following description, these drawings demonstrate and explain various principles of the present disclosure.
FIG. 1 shows a lens assembly including a pair of Fresnel lenses and a Fresnel reflector.
FIG. 2 shows an apparatus including a pair of Fresnel lenses and a Fresnel reflector.
FIG. 3 shows light propagation through an optical configuration including a pair of Fresnel lenses and a Fresnel reflector.
FIG. 4 shows an apparatus including a pair of Fresnel lenses having a base curvature.
FIG. 5 illustrates light propagation through an optical configuration including a pair of Fresnel lenses having a base curvature.
FIG. 6 further illustrates light propagation through an optical configuration including a pair of Fresnel lenses having a base curvature.
FIG. 7 illustrates an apparatus including an optical configuration including a Fresnel lens applied to a portion of a convex lens having a base curvature.
FIG. 8 further illustrates an apparatus including an optical configuration including a Fresnel lens applied to a portion of a convex lens having a base curvature.
FIG. 9 further illustrates an apparatus including an optical configuration including a Fresnel lens applied to a portion of a convex lens having a base curvature.
FIGS. 10 and 11 show example methods.
FIG. 12 shows a schematic of an example control system that may be used in connection with various embodiments.
FIG. 13 is an illustration of exemplary augmented-reality glasses that may be used in connection with various embodiments.
FIG. 14 is an illustration of an exemplary virtual-reality system (e.g., including a headset) that may be used in connection with various embodiments.

Throughout the drawings, identical reference characters and descriptions indicate similar, but not necessarily identical, elements. While the exemplary embodiments described herein are susceptible to various modifications and alternative forms, specific embodiments have been shown by way of example in the drawings and are described in detail herein. However, the exemplary embodiments described herein are not intended to be limited to the particular forms disclosed. Rather, the present disclosure covers all modifications, equivalents and alternatives falling within the scope of the appended claims.

### DETAILED DESCRIPTION

As is explained in greater detail below, embodiments of the present disclosure may include virtual and/or augmented-reality apparatus having improved performance and/or reduced weight. Examples may include an optical configuration that may include one or more lens assemblies having at least one Fresnel lens and/or at least one Fresnel reflector. Examples include AR/VR apparatus, where the term AR/VR may refer to augmented reality (AR) and/or virtual reality (VR).

Example apparatus may include a lens assembly including a first lens (e.g., a Fresnel lens), a reflector (e.g., a Fresnel reflector), and a second lens that may include a Fresnel surface (e.g., including facets and risers). The second lens may allow improved image brightness uniformity, as discussed in more detail below.

In some examples, an apparatus may include a display and an optical configuration configured to provide an image of the display, for example, in a head-mounted device. The optical assembly may include a first lens assembly including a lens and a reflector, and a second lens assembly including a second lens and a second reflector. In some examples, the first lens assembly has a front surface configured to receive display light from the display when the display is energized. The first lens assembly may include at least one Fresnel surface (e.g., a Fresnel surface including facets and steps) that may, for example, be formed in a lens surface, or in the surface of a substrate supported by a lens surface.

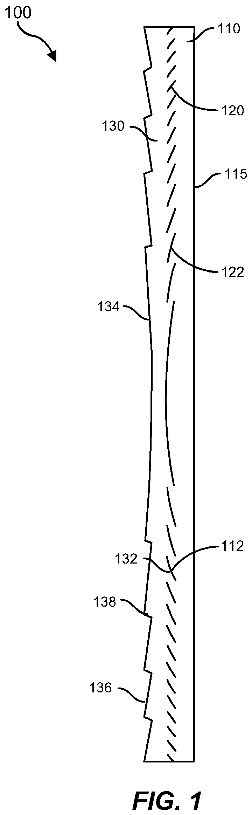

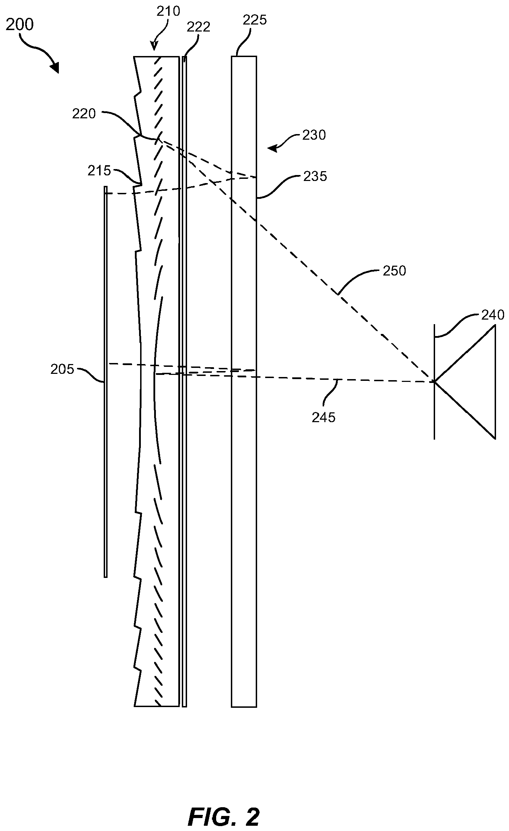

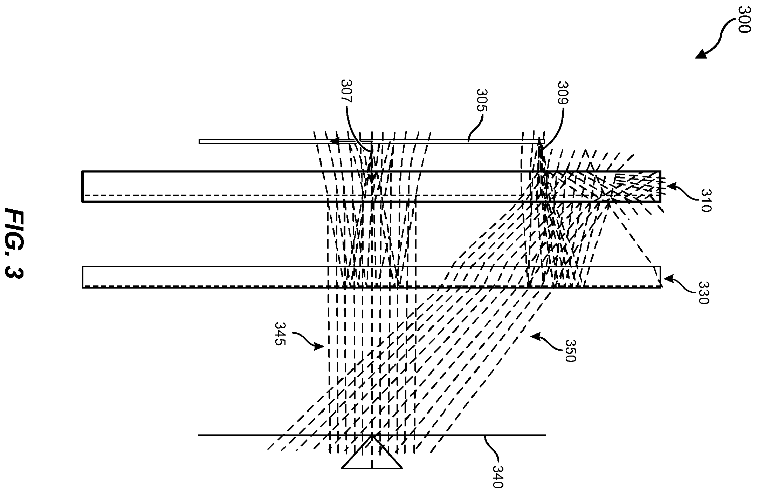

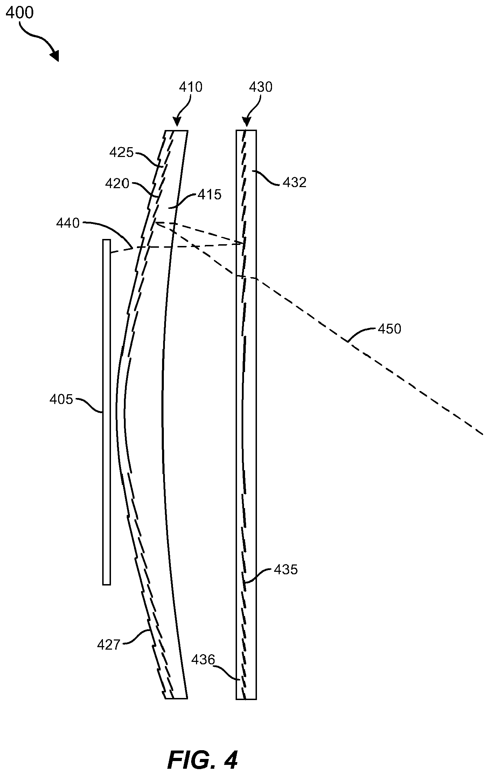

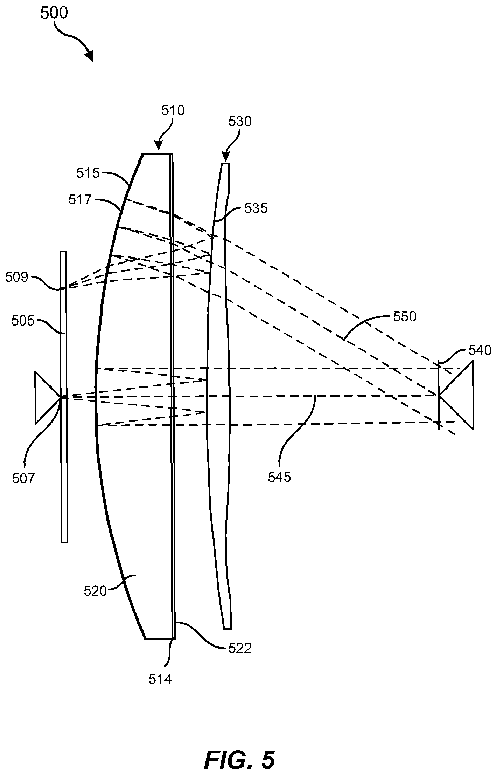

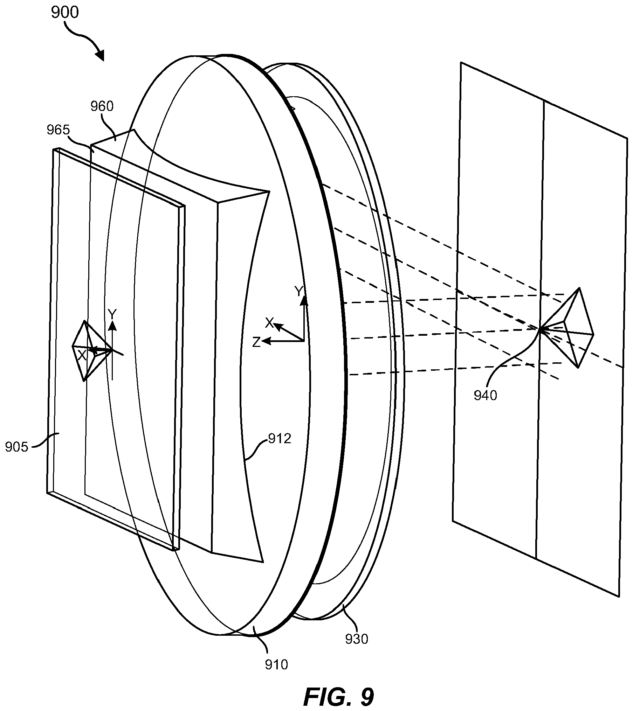

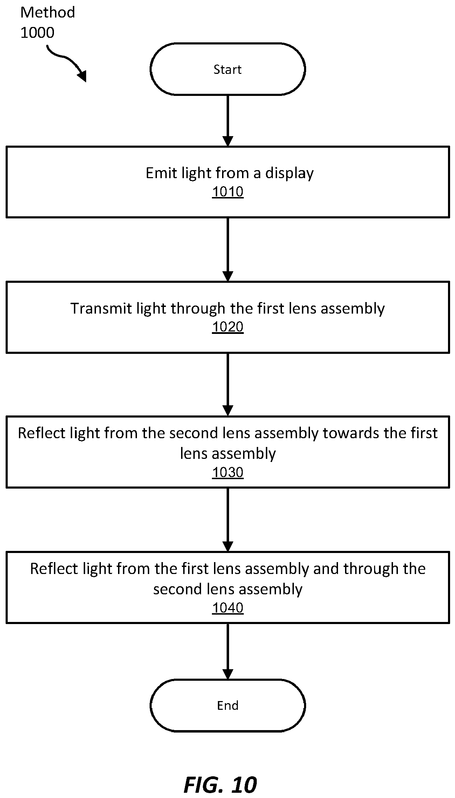

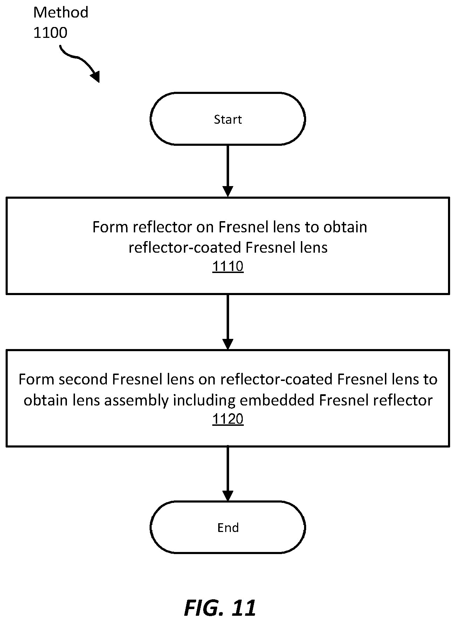

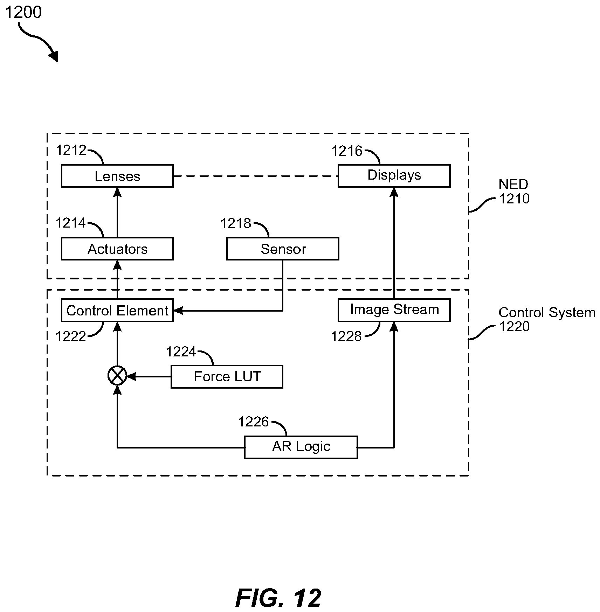

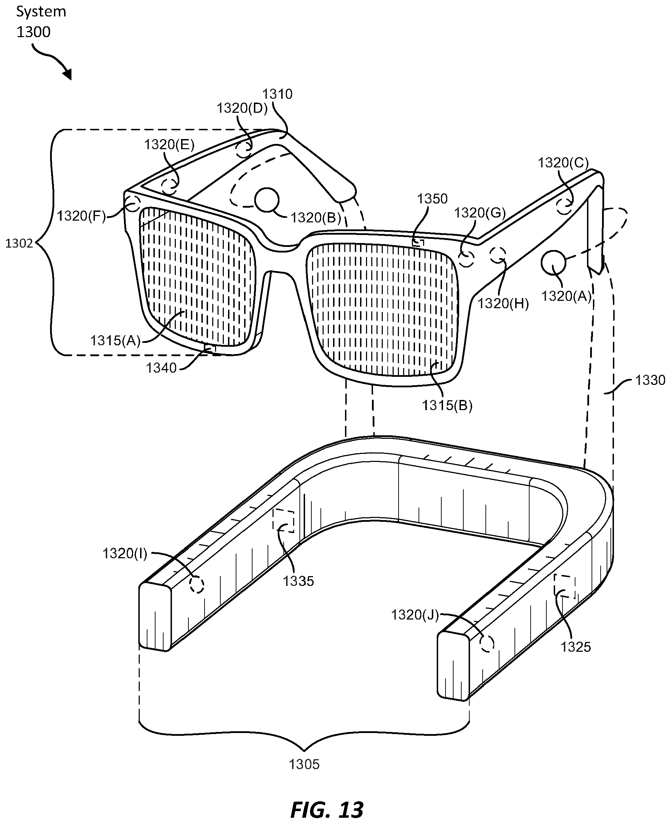

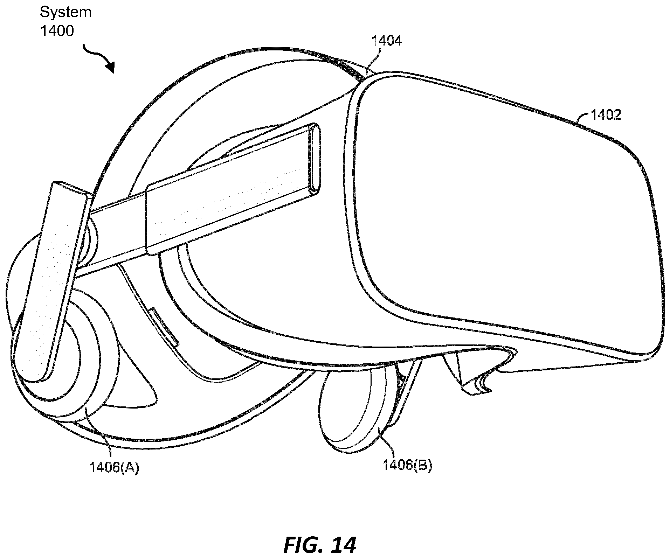

The following provides, with reference to FIGS. 1-14, detailed descriptions of example embodiments. FIG. 1 illustrates a lens assembly including a pair of Fresnel lenses and a Fresnel reflector. FIGS. 2 and 3 illustrate light propagation through an apparatus including at least one light assembly. FIG. 4 illustrates, for example, a Fresnel reflector having a base curvature arising from a refractive lens surface. FIGS. 5-8 illustrates light propagation through various optical configurations including a pair of lens assemblies. FIG. 9 further illustrates an apparatus including an optical configuration including a Fresnel lens having a Fresnel surface formed in a portion of a substrate applied to a portion of a lens. FIGS. 10 and 11 show example methods in accordance with various embodiments. FIG. 12 shows a schematic of an example control system, and FIGS. 13 and 14 illustrate exemplary augmented-reality and virtual-reality systems that may be used in connection with various embodiments.

FIG. 1 shows a lens assembly 100 including a pair of Fresnel lenses and a Fresnel reflector in accordance with various embodiments. As discussed in more detail below, the lens assembly 100 may have at least one exterior structured surface including one or more Fresnel facets, where the Fresnel facets may form a Fresnel lens over at least a portion of the at least one surface of the lens assembly 100. The lens assembly 100 may include a first Fresnel lens 110 including first transparent material, a Fresnel reflector 120, and a second Fresnel lens 130 including a second transparent material. The first Fresnel lens 110 may include a rear surface 115, which may be a planar surface (as illustrated), a concave surface, a convex surface, a spherical surface, a non-spherical surface, a freeform curved surface, or a Fresnel surface (e.g., that may provide the segmented equivalent of an earlier-listed curved surface using a plurality of facets). The rear surface 115 of the lens assembly 100 may support one or more additional layers such as one or more of an antireflective coating, dichroic filter, absorbing polarizer, optical absorber, optical retarder (e.g., a quarter-wave retarder), reflector (e.g., a reflective polarizer and/or beamsplitter), diffractive element, or one or more index matching layers configured to optically couple the lens assembly 100 to one or more other optical elements (e.g., including one or more of a lens, prism, grating, additional optical layer(s) or other optical element(s)). The first Fresnel lens 110 may include a front surface 112 that may be a structured surface such as a surface including Fresnel facets. The Fresnel reflector 120 may have a segmented structure that includes segments (that may be referred to as Fresnel reflector facets) such as Fresnel reflector facet 122. The Fresnel reflector 120 (including facets such as Fresnel reflector facet 122) may be located between the first Fresnel lens 110 and the second Fresnel lens 130. The first and second transparent materials may be the same or different materials. If the first and second transparent materials have similar refractive indices for visible light, then the steps between the reflector facets 122 may not be visually discernable. The second Fresnel lens 130 may have an exterior structured surface 134 including Fresnel facets 136 and risers 138. The Fresnel facets 136 may be physically larger than the corresponding reflector facets 122 and, in some examples, may be molded into the exterior surface of the lens assembly 100. The second Fresnel lens 130 may have an interior surface 132 that may be structurally complementary to the front surface 112 of the first Fresnel lens 110. The interior surface 132 and front surface 112 may conform to each other and also to the Fresnel reflector that may be located between the interior surface 132 and front surface 112. In some examples, the Fresnel reflectors 120 may only cover the facets of the first Fresnel lens and not the risers that separate the facets.

In some examples, the Fresnel reflector 120 may be deposited on the front surface 112 of the first Fresnel lens 110. The interior surface 132 of the second Fresnel lens 130 may be urged against the combination of first Fresnel lens 110 and Fresnel reflector 120 to form the lens assembly 100. In some examples, the Fresnel reflector 120 may be deposited on the interior surface 132 of the second Fresnel lens 130 and the front surface 112 of the first Fresnel lens 110 may be urged against the combination of second Fresnel lens 130 and Fresnel reflector 120 to form the lens assembly 100.

In some examples, the first and/or second transparent material may include an acrylate polymer (e.g., polymethylmethacrylate, PMMA), a silicone polymer (e.g., polydimethylsiloxane, PDMS), cyclic olefin copolymer (COC), a cyclic olefin polymer (COP), or other suitable polymer, analog, derivative, blend or other combination of one or more polymers. Example transparent materials may further include inorganic glasses such as oxide glasses, such as silicate glasses such as borosilicate glass, soda lime glass, or fused silica. In some examples, a transparent material may include an enclosure including a lens fluid (e.g., within an adjustable fluid lens).

FIG. 2 shows an apparatus including a pair of Fresnel lenses and a Fresnel reflector in accordance with various embodiments. Apparatus 200 includes display 205, first lens assembly 210 and second lens assembly 230. First lens assembly 210 may be similar to the lens assembly 100 discussed above in relation to FIG. 1, and may include a faceted exterior surface 215 (the front surface of the lens assembly 100), Fresnel reflector 220, and may further include an optional optical retarder 222. The second lens assembly 230 may include a reflector 235. Display 205 emits display light towards the first lens assembly 210, where the display light passes through the first lens assembly 210 and is reflected by the reflector 235 of second lens assembly 230. The reflector 235 may include a reflective polarizer or a partially reflective, partially transparent coating (e.g., a beamsplitter or other partial reflector). For example, light rays 245 and 250 are emitted from the display 205 through first lens assembly 210 to the reflector 235 of second lens assembly 230, and are reflected back to the first lens assembly 210. The perimeter 225 of the second lens assembly may generally match that of the first lens assembly, and may be circular, oval, or other shape (e.g., any suitable lens perimeter shape). The light rays are then reflected by the Fresnel reflector 220 of first lens assembly 210, and pass through the second lens assembly 230 to the eyebox 240. In this context, the eyebox 240 may be at a location where the eye of the user may be located to view a virtual reality image element or augmented reality image element using the apparatus 200.

FIG. 3 shows light propagation through an optical configuration including a pair of Fresnel lenses and a Fresnel reflector in accordance with various embodiments. FIG. 3 shows an apparatus 300 that may be similar to the apparatus 200 discussed above in relation to FIG. 2. Apparatus 300 may include display 305, first lens assembly 310 that may be similar to first lens assembly 210 discussed above in relation to FIG. 2, and second lens assembly 330. The figure shows simulated ray traces for partially collimated ray bundles 345 and 350 (e.g., similar to light rays 245 and 250 discussed above in relation to FIG. 2). The simulations modeled the lens assemblies as thin lenses that form ray bundle 345 and ray bundle 350 that illuminate the eyebox 340. The ray bundle 345 is emitted from central portion 307 of display 305, and ray bundle 350 is emitted by peripheral portion 309 of display 305.

FIG. 4 shows an apparatus 400 in accordance with various embodiments including a pair of Fresnel lens assemblies. At least one Fresnel lens assembly may have a base curvature in one or both surfaces and/or a Fresnel reflector embedded in the Fresnel lens assembly. Apparatus 400 includes display 405, a first lens assembly 410 and a second lens assembly 430. First lens assembly 410 may include a Fresnel reflector 420 (e.g., a reflective/transparent beamsplitter or polarized reflector) located between first Fresnel lens 415 and second Fresnel lens 425. The exterior surface of the second Fresnel lens 425 may include a structured surface such as a Fresnel surface formed on the exterior surface 427 of second Fresnel lens 425. In various examples, the Fresnel surface may be formed in a curved base surface, such as a convex surface (e.g., a spherical or non-spherical curved surface). The Fresnel reflector 420 may include reflective portions supported by Fresnel facets formed in a curved base surface. The base curvature may allow facet and step sizes to be reduced, which may help reduce visibility of structured surface features to the user. For example, reducing the height of the risers and/or avoiding deposition of reflective coatings on the risers may help reduce the visibility of the risers to the user.

In some examples, the first Fresnel lens 415 may have a curved rear surface, such as a concave surface. An optional optical retarder may be supported by the rear surface of the first Fresnel lens 415. Second lens assembly 430 may include a second Fresnel reflector 435 located between a second front Fresnel lens 436 and a second rear Fresnel lens 432. Second lens assembly may be similar to the lens assembly 100 discussed above in relation to FIG. 1. One or more lens assembly surface and/or interior interfaces may support one or more optional layers, such as one or more of a quarter wave retarder, a reflective polarizer, absorption layer, other optical layer, or a combination thereof. Display 405 may emit display light ray 440 which is transmitted through first lens assembly 410, reflected by second lens assembly 430, reflected by the Fresnel reflector 420 within the first lens assembly 410, and transmitted through second lens assembly 430, forming light ray 450 that is directed, for example, to a user's eye (not shown) when a user wears the apparatus.

In some examples, the first Fresnel lens 415 may be replaced by a non-Fresnel refractive lens A reflector may be deposited on the convex surface of the refractive lens. A Fresnel substrate may include a layer supported by the refractive lens, in some examples, supported by a reflector-coated refractive lens. A Fresnel surface may be formed in the Fresnel substrate to form a Fresnel lens with a convex base curvature, supported by the refractive lens. The lens assembly formed using this approach may be similar to that illustrated as first lens assembly 410 in FIG. 4, but with a smooth interface between the two lenses that may include the reflector.

In some examples, forming a Fresnel surface with a base curvature (e.g., forming a Fresnel surface in or on a convex surface of a lens) may allow the facet and/or step sizes of the Fresnel surface to be reduced, compared to formation of a Fresnel surface on a planar surface. In some examples, a Fresnel substrate may be formed on a curved surface of a refractive lens, and a Fresnel surface may be formed in a surface of the Fresnel substrate. The curvature of the surface of the Fresnel substrate may differ from that of the curved surface of the refractive lens, and in some examples may be generally planar. In some examples, a curved surface may be generally convex or concave.

In some examples, the first lens assembly 410 has an exterior surface 427 (e.g., an exterior front surface facing the display 405) that may include a curved surface, such as a spherical surface, a conical surface, a surface including a combination of spherical and conical components, a parabolic surface, or other non-spherical surface such as a freeform surface. In some examples, the exterior surface 427 may be a convex surface. In some examples, the Fresnel reflector 420 may have a base curvature that at least approximately is parallel or otherwise follows the shape of the exterior surface 427 of second Fresnel lens 425. This combination of geometric and Fresnel surfaces (e.g., a structured surface such as a Fresnel lens formed in a surface with a base curvature) may allow a higher resolution image near the center of the displayed image (e.g., at the eyebox), and may allow a reduced thickness of the display lens assembly due to additional refraction at the Fresnel lens. In this context, the Fresnel lens may include a Fresnel surface including facets and risers formed in a surface that may have a base curvature that is convex or concave, or may be a planar surface. This approach may reduce the weight of the apparatus, which is desirable in a wearable device.

FIG. 5 illustrates light propagation through an optical configuration including a pair of Fresnel lenses having a base curvature in accordance with various embodiments. Apparatus 500 includes a display 505 configured to emit ray bundle 545 from a central portion 507 of the display 505 and a ray bundle 550 from a peripheral portion 509 of the display 505. The ray bundles pass through the exterior surface 517 of the first lens assembly 510, where the exterior surface 517 may support a reflector 515 (e.g., a transmissive/reflective beamsplitter or a reflective polarizer layer disposed on the surface). Light rays emitted from a central portion 507 of display 505 may have a chief ray that is normal to the display 505. These light rays may pass through the first lens assembly 510, pass through optional optical retarder 522 (e.g., a quarter wave retarder or other optical layer), reflect off the reflector 535 of second lens assembly 530, pass through optional optical retarder 522 formed on the planar rear surface 514 of lens 520, reflect off of the reflector 515 supported by the exterior surface 517 of lens 520 (e.g., the convex front surface of the lens), and pass through the second lens assembly 530 to form ray bundle 545 that may include a partially collimated ray bundle illuminating the eyebox 540. The reflector 515 may include a polarized reflector or a partial reflector such as a beamsplitter.

The light rays emitted from a peripheral portion 509 of the display 505 may have a chief ray angle that is directed away from the center of the display 505 (sometimes termed an off-normal chief ray). This ray reflects from the second lens assembly 530, reflects from the first lens assembly 510, and forms a ray bundle 550 that may be an at least partially collimated ray bundle illuminating the eyebox 540. Light rays emitted perpendicular to the display are usually brighter than off-normal light rays, so ray bundle 550 may be appreciably less bright than ray bundle 545. This difference in brightness between normal and off-normal rays emitted by the display 505 may result in a non-uniform image brightness at the eyebox 540 that may be visually discernable to the user.

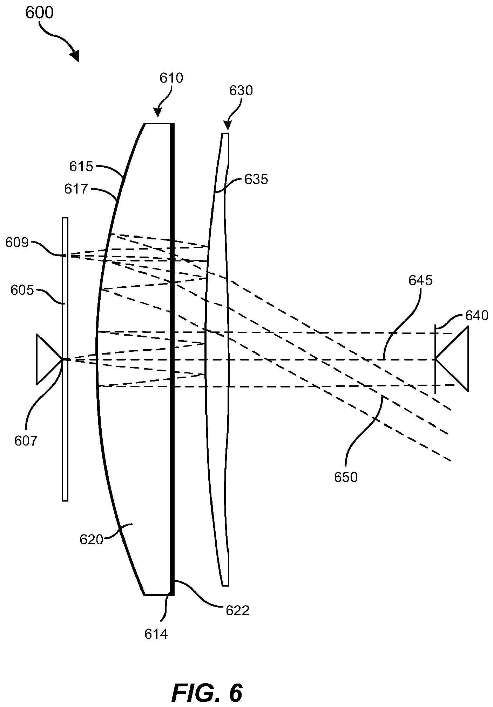

FIG. 6 further illustrates light propagation through an optical configuration including a pair of Fresnel lenses having a base curvature in accordance with various embodiments. FIG. 6 shows an apparatus including display 605, first lens assembly 610, and second lens assembly 630. Apparatus 600 may be similar to apparatus 500 shown in FIG. 5, for example, where the first lens assembly 610 includes a convex lens 620 (e.g., a refractive lens) having a reflector 615 formed on the convex front surface 617 on the display side of the convex lens 620, and an optional optical retarder 622 formed on the planar rear surface 614 on the eye-side of the convex lens 620. The second lens assembly 630 includes a second reflector 635. Light rays from both the central region 607 and the peripheral region 609 of the display 605 have chief rays normal to the display 605. First and second lens assemblies act cooperatively as described above to form a ray bundle 650 (e.g., a collimated ray bundle). In this case, ray bundle 650 may have similar brightness to ray bundle 645, but the ray bundle 650 does not illuminate the eyebox 640.

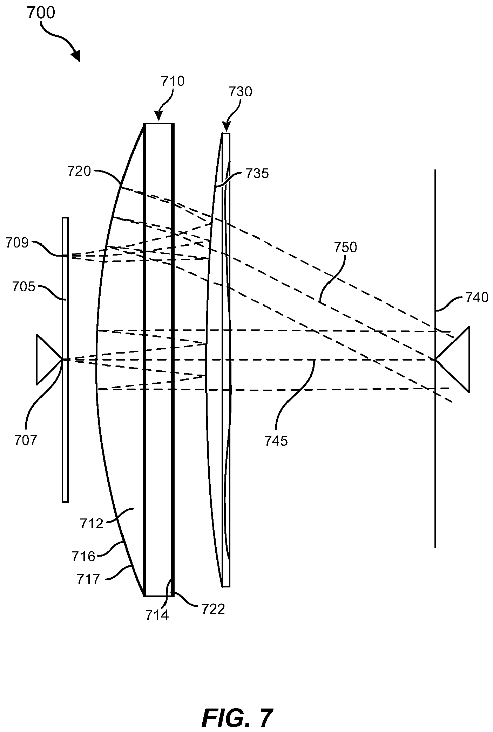

FIG. 7 illustrates an apparatus having a lens assembly including a refractive lens having a curved surface that supports an additional Fresnel lens, in accordance with various embodiments. The additional Fresnel lens may include facets and risers formed in a non-planar surface, such as a surface having a base curvature, where the base curvature may be provided by at least a portion of a convex lens surface. Apparatus 700 includes a display 705, a first lens assembly 710 and a second lens assembly 730. The first lens assembly 710 may include a refractive lens 712 having planar rear surface 714 and a convex front surface 717. In this context, a front surface is closer to the display than the rear surface. The second lens assembly 730 may include a second reflector 735.

In some examples, a Fresnel surface 720 may be formed in or supported by the convex front surface 717 of refractive lens 712, effectively providing an additional transmissive and refractive Fresnel lens on the convex front surface 717 of the refractive lens 712. In some examples, the Fresnel surface 720 may be formed in a Fresnel substrate, for example, that may include an optically clear layer supported by the convex front surface 717 of the refractive lens 712. The shape of the Fresnel substrate may generally conform to that of the convex front surface 717. In some examples, a reflector 716 may be disposed on at least a portion of the convex front surface. The reflector 716 may be located between the convex front surface 717 and an additional Fresnel substrate, and the reflector 716 may extend between the convex front surface of the lens and the Fresnel substrate attached to the curved surface of the first lens. In some examples, the Fresnel surface 720 (and hence the equivalent refractive Fresnel lens provided by the Fresnel surface 720) may have a base curvature defined by the convex front surface 717 of the refractive lens 712. The planar rear surface 714 of refractive lens 712 may support or be adjacent or proximate to an optional optical retarder 722.

The Fresnel surface 720 may further refract light rays emitted from the display 705, in addition to refraction associated with the base curvature of the convex lens. A ray bundle 745 is emitted with a chief ray normal to the display 705 from central portion 707 of display 705 and illuminates the eyebox 740. A peripheral portion 709 of display 705 emits a chief ray normal to the display 705. The rays form collimated ray bundle 750 that also illuminates the eyebox 740. As both ray bundle 745 and ray bundle 750 are provided by rays emitted with a chief ray normal to the display, both ray bundles have a similar brightness. This creates an image for the user with improved brightness uniformity.

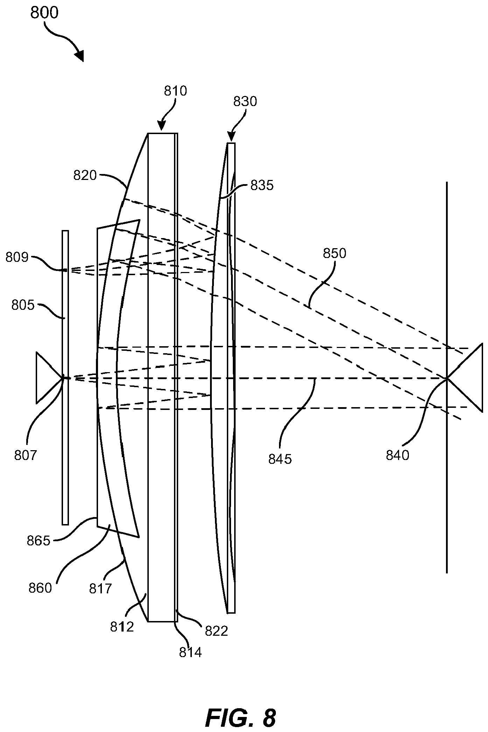

FIG. 8 further illustrates an apparatus including an optical configuration including a Fresnel lens applied to a portion of a convex lens having a base curvature, in accordance with various embodiments. Apparatus 800 includes a display 805, a first lens assembly 810 and a second lens assembly 830. The second lens assembly 830 may include a second reflector 835.

First lens assembly 810 may include a refractive lens 812 having a planar rear surface 814 and a convex front surface 817. A Fresnel substrate 860 is attached to a portion of the convex front surface 817 (which may be termed the covered portion) and may be supported by the convex front surface 817 of refractive lens 812. For example, the Fresnel surface 865 may be formed in the Fresnel substrate 860 that may be adhered or otherwise attached to the curved surface of the refractive lens. The front surface of the Fresnel substrate 860 may have a generally planar or curved front surface in which the Fresnel surface is formed, and the Fresnel substrate may have a concave rear surface that conforms to the curved surface of the first lens. The Fresnel substrate 860 may be located over only a portion of the convex front surface 817 of the refractive lens 812, such as a rectangular portion having a shape, area, and/or aspect ratio approximately equal to that of the display. Similar to the apparatus 700 discussed above in relation to FIG. 7, a Fresnel surface 820 may be formed in or supported by the convex front surface 817 of refractive lens 812. In some examples, the Fresnel surface 820 may only be present within the Fresnel substrate 860 of the convex front surface 817 of the refractive lens 812. In some examples, the Fresnel substrate 860 may cover a generally rectangular portion of the convex front surface 817, and the generally rectangular portion may have an aspect ratio at least approximately equal to the aspect ratio of the display 805. The Fresnel surface may effectively provide an additional transmissive Fresnel lens on the convex front surface 817 of the refractive lens 812 within the Fresnel substrate 860. The Fresnel surface of the Fresnel substrate 860 may have a base curvature defined by the convex surface of the refractive lens 812. In some examples, the Fresnel surface 865 of the Fresnel substrate 860 may have a base curvature defined by a Fresnel surface 865 that may be appreciably less than that of the convex front surface 817 of the refractive lens 812, and in some examples the Fresnel surface 865 may include facets and steps formed in a generally planar or approximately planar surface.

The planar rear surface 814 of refractive lens 812 may support or otherwise be adjacent or proximate to an optional optical retarder 822. The Fresnel surface 820 may further refract light rays emitted from the display 805, in addition to refraction associated with the base curvature of the convex lens or the curvature of the Fresnel surface 865 (if different). Ray bundle 845 arises from light emitted from a central portion 807 of display 805 with a chief ray normal to the display 805. A peripheral portion 809 of display 805 also emits light with a chief ray normal to the display 805. The ray bundles 845 and 850 may both be at least partially collimated ray bundles that illuminate the eyebox 840. As both ray bundles 845 and 850 are provided by rays emitted with a chief ray normal to the display, both ray bundles have a similar brightness. This creates an image (e.g., an AR/VR image) that may be viewable by the user and having an improved brightness uniformity.

FIG. 9 further illustrates an apparatus including an optical configuration including a Fresnel lens applied to a portion of a convex lens having a base curvature, in accordance with various embodiments. The apparatus 900 may be similar to the apparatus 800 discussed above in relation to FIG. 8. Apparatus 900 includes display 905, first lens assembly 910, and second lens assembly 930. The convex surface of a refractive lens 912 supports a Fresnel portion 960 having a Fresnel portion surface 965 in which a Fresnel surface may be formed. The apparatus may be configured to provide an image (e.g., an AR/VR image) of this display at the eyebox 940, where the eye of a user may be located when the apparatus includes a wearable device worn by the user. In this and other examples, an apparatus may include a single display and a single optical configuration, a pair of displays and a pair of optical configurations (e.g., a display and an optical configuration for each eye), a single display and a pair of optical configurations (e.g., an optical configuration for each eye).

FIG. 10 shows an example method in accordance with various embodiments. A method 1000 may include emitting display light from a display (1010), transmitting the display light through a first lens assembly including a Fresnel lens and a first reflector (1020), reflecting the display light from a second lens assembly including a second reflector (1030), and reflecting the display light from the first reflector so that the light passes through the second lens assembly (1040), for example, towards an eye of a user. For example, the method may be performed by an AR/VR device when the user wears the AR/VR device. A method may include forming an augmented reality image or a virtual reality image using the display light. The first reflector may be located on a plurality of facets of a Fresnel lens within the first lens assembly, or may be located on the curved surface of a refractive lens that further supports a substrate having a Fresnel surface. An example reflector may include a polarized reflector or a beamsplitter.

FIG. 11 shows an example method 1100 in accordance with various embodiments. Example method 1100 may include forming a reflector on a Fresnel lens to obtain a reflector-coated Fresnel lens (1110), and forming a second Fresnel lens on the reflector-coated Fresnel lens to form a lens assembly including an embedded Fresnel reflector (1120). The first and second Fresnel lenses may have complementary Fresnel surfaces that may fit together to form a lens assembly that includes a Fresnel reflector embedded in at least one solid optical medium. In this context, a Fresnel reflector may include reflector segments that cooperatively approximate a continuous curved reflective surface. Discontinuities (e.g., steps) between reflective segments may allow a Fresnel reflector to be formed on a generally planar surface, such as a Fresnel surface including facets and risers.

In some examples, a Fresnel reflector may be formed with an underlying base curvature provided by the curved surface of a refractive lens. For example, reflector segments may have a curvature and/or orientation that is based on the distance of the segment from the optical center of the reflector (e.g., an average radial distance of the segment from the optical center of the lens).

In some examples, a method may include forming a reflector on a curved surface (e.g., a convex surface such as a convex aspheric surface) of a lens to form a reflector-coated lens, and forming a Fresnel surface within a substrate supported by the reflector-coated lens.

Examples are not limited to specific arrangements of elements discussed herein. Examples include configurations in which the arrangement of optical elements may be varied. For example, in some examples, the term "front" is used to describe, for example, a surface of an optical element that faces the display (e.g., the front surface may be closer to the display than the rear surface). However, in some examples, the configuration of a lens assembly may be modified by a rearrangement of optical elements. In some examples, the designation of first lens assembly and second lens assembly may be arbitrary. In some examples, an apparatus may be configured so that the display light passes through the first lens assembly, is reflected by a reflector of the second lens assembly, is reflected by a reflector of the first lens assembly, and then passes through the second lens assembly, for example, to the eye of a user. In some examples, the apparatus may be configured so that the display light passes through the second lens assembly, is reflected by a reflector of the first lens assembly, is reflected by a reflector of the second lens assembly, and then passes through the first lens assembly, for example, to the eye of a user.

In some examples, an optical system may include a beamsplitter coating and a reflective polarizer coating, where the reflective polarizer coating is a Fresnel reflector. The beamsplitter coating may also form a Fresnel reflector.

An optical system may include a first coating on the first surface of a first optically transparent material that forms a Fresnel reflector and a second coating on a second surface, where the first coated Fresnel reflector is optically immersed with a second optically transparent material, and where the first and second coatings are a combination of a beamsplitter and a reflective polarizer. The second optically transparent material may have a similar refractive index to the first optically transparent material. The second optically transparent material may have a different refractive index to the first optically transparent material, with a difference in refractive index of approximately equal to or greater than 0.05, for example, approximately equal to or greater than 0.1, approximately equal to or greater than 0.2, or approximately equal to or greater than 0.5.

In some examples, the second optically transparent material has a different optical dispersion than the first optically transparent material, with a difference in refractive index between the refractive index at 600 nm and the refractive index at 440 nm being approximately equal to or greater than 0.1, for example, approximately equal to or greater than 0.2, approximately equal to or greater than 0.3, or approximately equal to or greater than 0.5. Refractive index and/or optical dispersion may be determined at a typical operational temperature such as 20 °C or 25 °C.

In some examples, the second optically transparent material is formed into a refractive Fresnel lens. The first and/or second Fresnel lens may have a different optical power than the Fresnel reflector. The first and/or second Fresnel lens may have a different optical curvature than the Fresnel reflector.

In some examples, the riser angles of the Fresnel lens may be spatially configured (e.g., optimized) to minimize optical artifacts. The riser angles of the Fresnel reflector may be spatially configured (e.g., optimized) to minimize optical artifacts.

In some examples, the spatial distribution of the riser angles of the Fresnel reflector may be different than those of one or more surfaces of one or more Fresnel lenses in the lens assembly. In some examples, the Fresnel reflector and Fresnel lens may be adjacent to each other and may have a similar base curvature. In some examples, the base curvature may be based on the convex or concave surface of a refractive lens, such as a spherical or non-spherical (e.g., conic, parabolic, or freeform lens). In some examples, a Fresnel reflector may have a different base curvature to that of one or more Fresnel surfaces of an example lens assembly. In some examples, a reflector may include a reflective polarizer or beamsplitter formed as a layer on at least the facets of a Fresnel surface. In some examples, an optical lens includes a reflective coating on a first Fresnel surface that may be adjacent to a second refractive Fresnel surface.

In some examples, an apparatus may include a first lens assembly including a first lens, a reflector, and an actuator layer. The reflector may include a polarizing reflector, beam splitter or other reflector. An apparatus may further include a second lens assembly including a second lens and a second reflector, such as a polarizing reflector, beam splitter, or other reflector. In some examples, the second lens assembly may include a second lens, a second reflector (e.g., a beam splitter or reflective polarizer). In some examples, the second lens may include a reflector and an absorbing polarizer. For example, the second reflector may provide an approximately 50%/50% (reflected%/transmitted%) beam splitter. However, this ratio is not limiting and the reflected intensity percentage may range from 30% to 70%, with the transmitted percentage correspondingly ranging from 70% to 30%, neglecting absorption losses.

In some examples, an apparatus includes: a first lens assembly including a first reflective layer; and a second lens assembly including a reflective layer and a third layer (e.g., an actuator layer).

Regarding the second lens assembly, the reflective layer may include a reflective polarizer. In some examples, an absorbing polarizer layer may be adjacent and between the reflective layer and the third layer, and the polarization axis of the absorbing polarizer layer may be parallel to the polarization axis of the reflective layer. The reflective layer may be an approximately 50%/50% beam splitter. The beam splitter may include a thin metal coating on a substrate, such as a silver layer or aluminum layer on a glass or polymer substrate. The beam splitter may include a single dielectric layer or a multilayer structure such as a dielectric multilayer. In some examples, a beamsplitter may include a combination of one or more metal layers and one or more dielectric layers.

In some examples, the first lens assembly and/or the second lens assembly may each include at least one Fresnel lens. In some examples, a reflector may include a layer coated on the surface of a Fresnel lens. For example, a reflective polarizer may be supported on a planar or faceted surface of a Fresnel lens.

In some examples, a method of controlling the apparent distance of an image for a user includes: determining the desired viewing distance of an image; and applying a voltage to a transparent actuator in at least one lens making up the pancake lens to control the curvature of the lens. In some examples, the control of the curvature of the lens may use an open loop system. In some examples, a controller may provide at least one electrical signal to corresponding at least one pairs of electrodes to independently control a plurality of actuator layers. In some examples, the control of the curvature of the lens may use a closed loop feedback system where the curvature or a parameter based on the curvature (e.g., optical power) may be determined by a sensor (e.g., a capacitance sensor or an optical sensor such as an image and/or focus sensor). For example, a sensor may determine the curvature of the lens, and the voltage is controlled or adjusted based on the sensor measurement.

In some examples, a controlled birefringence actuator includes a first actuator layer and at least a second actuator layer, where the first and second layers have a high refractive index axis, and the orientation of the first and second layer are perpendicular to each other. For example, each actuator layer may be birefringent and have an optic axis parallel to the plane of the layer. For curved actuator layers, the local optic axis may be within the local plane of the layer). An actuator may include (e.g., have only) two actuator layers, where the optic axes of the pair of layers may be orthogonal to each other and may both be within the plane of the respective layers. In some examples, an actuator may include a stack of 3 or more actuator layers, where the orientation of each layer is clocked. In this context, clocked orientations may refer to actuator layers in which the optic axis (and/or direction of maximum actuation) for each layer may have an angular offset from that of an adjacent or neighboring layer. For example, the optic axes of a plurality of layers may rotate in angular increments around a direction generally orthogonal to the layers. The optic axes may generally describe a stepped spiral around the direction generally orthogonal to the layers. In some examples, an actuator may include at least 5 actuator layers and the orientation of each layer is clocked.

In some examples, at least one lens assembly may include an active lens, such as a lens assembly including an actuator layer that is transparent and can be electronically energized causing a change in the curvature of the lens. In some examples, the optical configuration may be described as a pancake lens, for example, an imaging lens having a first and a second partially reflective and partially transparent lens surfaces, where one of the surfaces may be a partial reflector, and the other surface may be reflective polarizer.

In some examples, a lens assembly may include an actuator. In some examples, an actuator may include a unimorph and/or a bimorph actuator. A unimorph actuator may include an electroactive layer where applying an electric field to the electroactive layer creates a mechanical force in the plane of the electroactive layer, and a passive layer such as a polymer film, such as an acrylate polymer film such as PMMA (polymethylmethacrylate).

In some examples, an apparatus may include: a display; a first lens assembly including a first lens, a first reflector, and optionally an actuator; and a second lens assembly including a second lens and a second reflector. In some examples, an apparatus may further include a controller, where the display may be configured to emit display light when energized, this display may show a display image received from a local or remote source, for example, from the controller. The apparatus may further be configured so that the display light passes through actuator, the actuator includes a plurality of actuator layers, and the controller is configured to apply at least one electrical signal to the actuator to control an optical power of the first lens assembly. An apparatus may include one or more actuators, such as one or more bimorph actuators and/or one or more unimorph actuators. A bimorph actuator may include a first electroactive layer bonded to a second electroactive layer, optionally with a passive layer located between the first and second electroactive layers. In some examples, an actuator may have a multilayer structure and the orientation of the layers may be clocked. In this context, clocked layers may refer to the direction of highest refractive index being rotated in an approximately uniform degree between neighboring actuator layers. For example, a 3 layer stack may have the orientation of the first, second, and third layers oriented (e.g., in plane) at 0°, 60°, and 120°. In some examples, the angular offset (e.g., in-plane angular offset) between successive birefringent layers (e.g., neighboring or adjacent layers, progressing through the stack) may be 360/N degrees, where N is the number of actuator layers in the actuator or a portion thereof.

In some examples, a method may include emitting light (e.g., including one or more light rays) from a display, transmitting the light through a first lens assembly, reflecting the light from a second lens assembly, and reflecting the light from the first lens assembly through the second lens assembly and towards an eyebox, for example, where a user may view an image of the display when the user wears the device. One or both lens assemblies may include a Fresnel lens. One or both lens assemblies may include an adjustable lens. The eye of a user may be located at the eyebox (e.g., a location of display image formation) for viewing the image of the display. The first lens assembly may include a first lens and a first reflective polarizer. The second lens assembly may include a second lens and a second reflective polarizer. In some examples, a method may further include adjusting at least one optical parameter (e.g., optical power and/or cylindricity) of at least one lens assembly.

In some examples, an optical retarder may be located between the first and second lens assemblies, and the light from the display may pass through the optical retarder on a plurality of occasions (e.g., three times) before being transmitted through the second lens assembly towards the eye of the user. In some examples, light may be emitted from the display with a polarization, such as a linear polarization or a circular polarization. The polarization may be modified by the optical retarder each time the light passes through the optical retarder. Reflections may also modify the polarization of light. For example, light (e.g., polarized light) from the display may be transmitted through the first lens assembly, pass through the optical retarder, be reflected by the second lens assembly, pass through the optical retarder, be reflected by the first lens assembly, pass through the optical retarder, and then be transmitted by the second lens assembly towards the eye of a user, where the light may be incident on the reflective polarizer with a first linear polarization, which may be reflected by the reflective polarizer of the second lens assembly. Light may reflect from the reflective polarizer of the first lens assembly and may then be transmitted by the reflective polarizer. In some examples, at least one of the lens assemblies may include an optical retarder and the separate optical retarder may be omitted from the optical configuration. In some examples, a method may further include adjusting at least one optical parameter (e.g., optical power and/or cylindricity) of at least one lens assembly.

In some examples, the image brightness provided by the display (e.g., including a display panel) using an optical configuration may include spatially adjusting the spatial profile of the illumination brightness of a light source (e.g., a backlight) and/or an emissive display. Display brightness may be adjusted as a function of one or more display parameters, such as spatial position on the display (e.g., spatial variations in image brightness), power consumption, aging effects, eye response functions, and/or other parameter(s).

In some examples, a method may include emitting light having circular or linear polarization from a display; transmitting the light through a first lens assembly; reflecting the light from a second lens assembly; and reflecting the light from the first lens assembly through the second lens assembly and towards an eye of a user. The apparatus may be configured so that the light is transmitted through the first lens assembly having a first polarization and reflected by the first lens assembly having a second polarization. This may be achieved using an optical retarder located between the first and second lens assemblies and/or using changes in polarization on reflection. A display may inherently emit polarized light or, in some examples, a suitable polarizer may be associated with (e.g., attached to) a surface through which light from the display is transmitted. In some examples, a method may further include adjusting at least one optical parameter (e.g., optical power and/or cylindricity) of at least one lens assembly.

Example methods include computer-implemented methods for operating an apparatus, such as an apparatus as described herein such as a head-mounted display or an apparatus for fabricating a lens assembly. The steps of an example method may be performed by any suitable computer-executable code and/or computing system, including an apparatus such as an augmented-reality and/or virtual-reality system. In some examples, one or more of the steps of an example method may represent an algorithm whose structure includes and/or may be represented by multiple sub-steps. In some examples, a method for providing a uniform image brightness from a display using a folded optic configuration may include using a lens assembly that is configured to reduce a spatial variation of the display brightness, for example, by using a refractive lens having a Fresnel surface formed in at least one convex surface, such as a conic or partially conic surface. In this context, light from a display may be reflected at least once (e.g., twice) within a folded optic configuration before reaching the eye of a user. In some examples, a method may further include adjusting at least one optical parameter (e.g., optical power and/or cylindricity) of at least one lens assembly.

In some examples, an apparatus, such as a head-mounted device or system, may include at least one physical processor and physical memory including computer-executable instructions that, when executed by the physical processor, cause the physical processor to generate an image on the display. The image may include a virtual reality image element and/or an augmented reality image element. The apparatus may include an optical configuration such as described herein. A controller may include at least one physical processor. The controller may be configured to adjust at least one optical parameter (e.g., optical power and/or cylindricity) of at least one lens assembly. A head-mounted device may be (or be a component of) an augmented-reality system, a virtual-reality system, or other apparatus.

In some examples, a non-transitory computer-readable medium may include one or more computer-executable instructions that, when executed by at least one processor of an apparatus (e.g., a head-mounted device), cause the apparatus to provide an augmented reality image or a virtual reality image to the user (e.g., the wearer of the head-mounted device). The apparatus may include an optical configuration such as described herein. A controller may include at least one physical processor and may include or be in communication with any other suitable components such as memory. The controller may be configured to adjust at least one optical parameter (e.g., optical power and/or cylindricity) of at least one lens assembly, for example, by adjusting at least one electrical signal applied to a multilayer actuator through which light used to provide an augmented reality image element passes.

In some examples, an apparatus (e.g., a head-mounted device such as an AR and/or VR device) may include an optical configuration including a pancake lens (e.g., a combination of a lens and a beamsplitter, which may also be termed a beamsplitter lens) and a reflective polarizer.

The optical configuration may be termed a folded optic configuration, and in this context, a folded optic configuration may provide a light path that includes one or more reflections and/or other beam redirections. An apparatus having a folded optic configuration may be compact, have a wide field-of-view (FOV), and allow formation of high-resolution images. Higher lens system efficiency may be useful for applications such as head-mounted displays (HMDs), including virtual reality and/or augmented reality applications.

An example apparatus may include a display, a pancake lens (e.g., including a beamsplitter or polarized reflector that may be formed as a coating on a lens surface), and a reflective polarizer (e.g., configured to reflect a first polarization of light and transmit a second polarization of light, where the first polarization and second polarization are different). For example, a reflective polarizer may be configured to reflect one handedness of circular polarized light and transmit the other handedness of circularly polarized light.

An example apparatus, such as a head-mounted device, may include a lens assembly including a lens and a reflective polarizer. An example reflective polarizer may be configured to reflect one polarization of light and transmit another polarization of light. For example, an example reflective polarizer may reflect one handedness of circularly polarized light and may transmit the other handedness of circularly polarized light. An example reflective polarizer may reflect one linear polarization direction and transmit an orthogonal linear polarization direction. An example apparatus may include a display, and the display may be configured to emit polarized light. In some examples, an apparatus may be an augmented-reality and/or virtual-reality (AR/VR) system, and may include a headset.

In some examples, an apparatus may include a display and an optical configuration. The optical configuration may include a first lens assembly and a second lens assembly. The first lens assembly may include a lens, such as a fluid lens (e.g., a liquid lens) and/or a Fresnel lens. The first lens assembly may include a reflective polarizer or a beamsplitter. An example reflective polarizer may be configured to reflect a first polarization and transmit a second polarization of incident light. The optical configuration may form an image of the display viewable by a user when the user wears the apparatus, and the image may provide an augmented reality image to the user.

Folded optic configurations (e.g., including one or more reflective elements such as beamsplitters and/or reflective polarizers) may be compact, have a wide field-of-view (FOV), and provide higher resolution for a given distance between the display and a viewer. Additionally, it may be valuable to adjust an eye focus distance (e.g., a visual accommodation) to an augmented reality image element to obtain a desired visual accommodation in the eye of the user. In some examples, the visual accommodation for a viewed image may be adjusted to at least approximately match an image distance corresponding to the user eye vergence used to view the provided left and right eye images. In this context, vergence may relate to an apparent distance to an image based on convergence of the viewing directions of left and right eyes, and visual accommodation (or, more concisely, accommodation) may refer to an apparent distance to the image based on the focal length of the eye. Visual accommodation may be adjusted by adjusting the optical power of at least one lens.

In some examples, the optical configuration may also provide a prescription lens adjustment of a real world image, for example, including corrections for optical power, cylinder and/or astigmatism. In some examples, a lens assembly may include a lens, such as a Fresnel lens, fluid lens or other refractive lens, and a beamsplitter and/or polarizing reflector.

In some examples, an apparatus component such as a lens or other optical element may include one or more optical materials. An example optical material may be selected to provide low birefringence (e.g., less than one quarter wavelength optical retardance, such as less than approximately 0/10, for example, less than approximately 0/20). In some examples, a Fresnel lens and/or filler polymer (and/or other optical element) may include a silicone polymer such as polydimethylsiloxane (PDMS), cyclic olefin polymer (COP), cyclic olefin copolymer (COC), polyacrylate, polyurethane, polycarbonate, or other polymer. For example, a silicone polymer (e.g., PDMS) lens may be supported on a rigid substrate such as glass or a polymer (e.g., a relatively rigid polymer compared with the silicone polymer). In some examples, the optical power of a silicone polymer lens having at least one curved surface may be adjusted using an actuator, such as a multilayer actuator.

In some examples, a component of an optical configuration may include one or more optical materials. For example, an optical material may include glass or an optical plastic. An optical material may be generally transmissive over some or all of the visible spectrum. In some examples, an optical component including a generally transmissive material may have an optical transmissivity of greater than 0.9 over some or all of the visible spectrum and may be termed optically transparent.

In some examples, a substrate (e.g., for a reflector), an optical material, and/or a layer (e.g., of an optical component) may include one or more of the following: an oxide (e.g., silica, alumina, titania, other metal oxide such as a transition metal oxide, or other non-metal oxide); a semiconductor (e.g., an intrinsic or doped semiconductor such as silicon (e.g., amorphous or crystalline silicon), carbon, germanium, a pnictide semiconductor, a chalcogenide semiconductor, or the like); a nitride (e.g., silicon nitride, boron nitride, or other nitride including nitride semiconductors); a carbide (e.g., silicon carbide), an oxynitride (e.g., silicon oxynitride); a polymer; a glass (e.g., a silicate glass such as a borosilicate glass, a fluoride glass, or other glass); or other material.

In some examples, a reflector may include a beam splitter (e.g., a partial reflector) and/or a reflective polarizer. In some examples, a beam splitter may include a thin metal coating, where the metal may include silver, gold, aluminum, other metal (e.g., other transition metal or non-transition metal), or any combination of metals such as an alloy. In some examples, the beamsplitter may include a dielectric layer, a dielectric multilayer, or polymer, such as a polymer layer having a silver appearance. For example, the beam splitter may include a dielectric single or multiple layer, or a combination of any approaches or materials described herein (e.g., a combination of one or more metal layers, dielectric layers, and/or other layers).

Example reflective polarizers may include, without limitation, cholesteric reflective polarizers (CLCs) and/or multilayer birefringent reflective polarizers. These and other examples are discussed in more detail below. A reflective polarizer may include a wire grid, a multilayer birefringent polymer, or a cholesteric reflective polarizer. In this context, a cholesteric reflective polarizer may have optical properties similar to (and in some examples, derived from) a cholesteric liquid crystal. A cholesteric reflective polymer may include a solid (e.g., have at least one solid component), such as a polymer (e.g., a cross-linked polymer), a polymer stabilized material or a polymer-dispersed material.

In some examples, a reflective polarizer may be fabricated by applying an alignment layer (e.g., a polymer layer or grating) and applying at least one layer of a cholesteric liquid crystal (CLC) which is at least partially aligned to alignment layer. The alignment layer may include a photoalignment material (PAM) that may be deposited on a substrate, and a desired molecular orientation may be obtained by exposing the PAM to polarized light (such as ultraviolet (UV) and/or visible light). A CLC may be further processed to lock the molecular alignment of a CLC within a solid material, for example, to provide a chiral material such as a chiral solid. For example, a CLC may be polymerized, cross-linked, and/or a polymer network may be formed through the CLC to stabilize the alignment to provide a chiral solid. A chiral solid may be referred to as a CLC-based material if a CLC phase was used in its preparation. In some examples, a CLC may be formed using an effective concentration of chiral dopant within a nematic liquid crystal, and the chiral nematic (cholesteric) mixture may further include polymerizable materials.

In some examples, a reflective polarizer may include a chiral material such as a material having molecular ordering similar to that of a cholesteric liquid crystal, such as a solid material derived from cooling, polymerizing, cross-linking, or otherwise stabilizing the molecular order of a cholesteric liquid crystal. For example, a chiral solid may be a solid having a helical optical structure similar to that of a cholesteric liquid crystal. For example, a direction of maximum refractive index may describe a helix around a normal to the local direction of molecular orientation.

Examples may include an apparatus including a folded optic configuration, such as an apparatus including one or more lenses, such as a pair of lens assemblies. Example optical configurations may allow an increased optical efficiency of an optical configuration, for example, by reducing losses associated with beamsplitters. Increased optical efficiency may provide one or more of the following aspects: improved image appearance (e.g., improved image brightness, uniformity and/or resolution), increased lens efficiency, reduced power consumption, and/or reduced heat generation for a given brightness. Examples also include associated methods, such as methods of fabrication of improved lens assemblies, methods of fabricating devices including one or more actuators and/or lens assemblies, or methods of device use.

In some examples, a reflective polarizer may include a birefringent multilayer optical film that may be conformed to a surface (e.g., the faceted substrate of a Fresnel lens or a membrane surface of an adjustable fluid lens) through a combination of heat and pressure.

In some examples, the reflective polarizer may include a cholesteric liquid crystal, a birefringent multilayer optical film, or a wire grid. In some examples, a reflective polarizer may include an arrangement of electrically conductive elements, such as wires, rods, tubes, or other conductive elements Electrically conductive elements may include at least one metal (e.g., copper, gold, silver, or other metal or alloy thereof), electrically conductive carbon allotrope, doped semiconductor, or the like. In some examples, a reflective polarizer may include a birefringent multilayer film, and the skin layer or layers may have a pass polarization refractive index that is within 0.2 of the average refractive index of the multilayer film, and in some examples, a refractive index that differs from the average refractive index of the multilayer film by at least approximately 0.02, such as at least approximately 0.05, for example, at least approximately 0.1. In some examples, a reflective polarizer may include a multilayer assembly including at least one optically isotropic layer adjacent to (e.g., alternating with) a birefringent (e.g., uniaxial) polymer layer. Layers may be generally parallel and may conform to an underlying optical element that may act as a substrate. An optically isotropic polymer layer may include an optically transparent polymer. A birefringent polymer layer may include an anisotropic polymer layer, such as a stretched or otherwise at least partially molecularly aligned polymer layer. For example, a polymer layer may be stretched by a factor of between 1.5 and 10 (e.g., stretched by a ratio of between 1.5:1 and 10:1, where the ratio represents a ratio of a final extent along a particular direction to an initial extent).

An example reflective polarizer may be configured to reflect a first polarization of light and transmit a second polarization of light. For example, a reflective polarizer may be configured to reflect one handedness of circularly polarized light (e.g., right or left) and transmit the other handedness of circularly polarized light (e.g., left or right, respectively). For example, a reflective polarizer may be configured to reflect one direction of linear polarized light (e.g., vertical) and transmit an orthogonal direction of linearly polarized light (e.g., horizontal). In some examples, the reflective polarizer may be adhered to a lens surface, such as the facets of a Fresnel lens.

In some examples, a reflective polarizer may include a cholesteric liquid crystal, such as a polymer cholesteric liquid crystal, or a solid layer having the optical properties of a cholesteric liquid crystal (e.g., a crosslinked or network stabilized CLC). In some examples, a reflective polarizer may include a birefringent multilayer reflective polarizer. In some examples, an example apparatus may further include an optical retarder, such as a quarter wave retarder, located between the beamsplitter and the reflective polarizer.

Example reflective polarizers (or other polarizers) may include polarizing films. An example polarizing film may include one or more layers, such as an optical polarizer including a combination of a reflective polarizer and a dichroic polarizer, for example, bonded together.

In some examples, a polarizing beam splitter may include a transparent lens with a first and a second surface, where the first surface may be an adjustable lens (e.g., a fluid lens, a Fresnel lens, or other lens) and the second surface is adjacent to a reflective polarizing layer. At least one of the first and second surfaces may have a cylindrical, spherical, or non-spherical shape. Example non-spherical curved surfaces may include parabolic, hyperbolic, conical, freeform, cylindrical or other aspherical curvature. In some examples, a curved surface (e.g., of a convex lens) may include a generally hyperbolic curved surface that may include both spherical and conical contributions. Curved surfaces may include contributions from one or more of spherical and/or non-spherical components.

In some examples, a reflector may include a reflective polarizer and/or a beamsplitter (e.g., a partial reflector). A partial reflector may include a coating that is partially reflective and partially transparent to at least one operational wavelength. In some examples, a reflector may change the handedness of reflected circularly polarized light. The reflector may include at least one thin uniform metallic coating, such as at least one of a thin silver or aluminum coating, a patterned metallic coating, a dielectric coating, other coating, or any combination thereof.

In some examples, a polarizer layer may include an arrangement of microparticles and/or nanoparticles in an optical material, such as a polymer matrix. Example optical materials may include one or more fluoropolymers (e.g., polymers of one or more monomer species such as tetrafluoroethylene, vinylidene fluoride, chlorotrifluoroethylene, perfluoroalkoxy compounds, fluorinated ethylene-propylene, ethylenetetrafluoroethylene, ethylenechlorotrifluoroethylene, perfluoropolyether, perfluoropolyoxethane, and/or hexafluoropropylene oxide). Example polymers may include organosilicon compounds such as silicone polymers, including polymers of siloxane or silyl derivatives such as silyl halides. Polymers may also include polymers of one or more monomer species such as ethylene oxide, propylene oxide, carboxylic acid, acrylates such as acrylamide, amines, ethers, sulfonates, acrylic acid, vinyl alcohol, vinylpyridine, vinylpyrrolidone, acetylene, heterocyclic compounds such as pyrrole, thiophene, aniline, phenylene sulfide, imidazole, or other monomer species. Particles may include particles including one or more materials such as metals (e.g., transition metals, aluminum, alloys), metal oxides (e.g., transition metal oxides, magnesium oxide, aluminum oxide, zinc oxide, zirconium oxide, or transparent conductive oxides such as indium tin oxide or antimony tin oxide), carbides, nitrides, borides, halides, fluoropolymers, carbonates (e.g., calcium carbonate), carbon allotropes (e.g., fullerenes or carbon nanotubes), and mixtures thereof. Examples also include glass particles, ceramic particles, silicates, or silica. Particles may include one or more polymers, including polymers described herein, such as poly(tetrafluoroethylene) particles. As used herein, particles may include microparticles, nanoparticles, spherical particles, rods, tubes, or other geometric or non-geometric shapes.

In some examples, an apparatus may include an optical configuration including a Fresnel lens assembly. In some examples, an example Fresnel lens assembly may include a reflective polarizer, for example, configured to reflect a first polarization of light and transmit a second polarization of light. For example, a reflective polarizer may reflect one handedness of circular polarized light and transmit the other handedness of circularly polarized light. Example apparatus may include a beamsplitter lens or, in some examples, a second Fresnel lens assembly. A beamsplitter lens may include a beamsplitter formed as a coating on a lens.

Fresnel lens assemblies including a reflective polarizer may be used in example augmented-reality and/or virtual-reality (AR/VR) systems. In some examples, a Fresnel lens assembly may include a Fresnel lens and at least one other optical component, such as one or more of a reflective polarizer, an optical filter, an absorbing polarizer, a diffractive element, an additional refractive element, a reflector, an antireflection film, a mechanically protective film (e.g., a scratch-resistant film), or other optical component. An apparatus including a Fresnel lens assembly may further include a display and a beamsplitter.

In some examples, an AR/VR system may include a Fresnel lens assembly including a Fresnel lens and a polarized reflector. The optical properties of the Fresnel lens may be optimized individually, but in some examples, the properties of a reflective polarizer, filler layer, or other layer may be configured to improve the Fresnel lens performance (e.g., by reducing chromatic aberration). In some examples, a Fresnel lens may be concave, convex, or may have a complex optical profile such as a freeform surface. For example, the structured surface of a Fresnel lens may include facets corresponding to portions of a freeform lens optical surface, or of other lens surfaces such as other concave or convex surfaces.

The wavelength-dependent properties of a Fresnel lens assembly, or polarized reflector, may be adjusted by, for example, adjusting one or more parameters of a multilayer film configuration (e.g., individual layer refractive indices, optical dispersion, and/or layer thicknesses). In some examples, a reflective polarizer may have a particular bandwidth of operation and the bandwidth of operation may be adjusted using one or more parameters of one or more components (e.g., refractive index, optical dispersion, layer thickness, and the like).

Applications of Fresnel lens assemblies may include use in the optical configuration of a wearable device (e.g., a head-mounted device), for example, use of one or more Fresnel lens assemblies in an optical configuration configured to form an image of a display viewable by a user when the user wears the wearable device. Other example applications may include IR (infra-red) rejection in, for example, imaging, display, projection, or photovoltaic systems. Applications may include wavelength selection for optical waveguides, for example, to select red, green, yellow, and/or blue wavelengths for transmission along a waveguide using a Fresnel lens assembly at the waveguide input. In some examples, a structured surface may be formed at the light entrance to any suitable optical component and configured as a Fresnel lens assembly.

A Fresnel lens assembly may include a Fresnel lens and a polarizer. For example, at least one facet of a Fresnel lens may support a reflective polarizer or absorption polarizer. A Fresnel lens may include a plurality of facets and steps formed in an otherwise planar surface, a cylindrical surface, a freeform surface, a surface defined at least in part by a Zernike function, or a spherical surface. A Fresnel lens assembly may include additional components, such as a substrate, filler polymer layer, or any suitable optical element.

In some examples, a Fresnel lens assembly may include a Fresnel lens and a reflective polarizer. In some examples, the reflective polarizer may be supported by (e.g., deposited on, adhered to, or otherwise supported by) the facets of the Fresnel lens.

In some examples, a Fresnel lens assembly including a reflective polarizer may further include a filler layer. The filler layer may include an optically clear layer that is located on the structured surface of the Fresnel lens assembly. For example, a filler layer may conform to the facets and steps of a structured surface (e.g., of a Fresnel lens) and has a second surface without facets or steps, for example, a generally smooth surface. For example, the filler layer may have a planar, concave or convex surface that may also be an exterior surface or support one or more additional layers, such as an antireflection layer or other optical layer. A reflective polarizer may be formed on a facet of a structured optical element, such as a Fresnel lens. In some examples, a reflective polarizer may include a multilayer reflective polarizer including at least one birefringent layer. In some examples, a reflective polarizer may include one or more polymer layers and/or one or more inorganic layers.

In some examples, a structured optical element may include a substrate having a surface including facets and steps, where the steps are located between neighboring (e.g., proximate or substantially adjacent) facets. A reflective polarizer may be located adjacent to and conforming to at least a portion of a faceted surface. In some examples, a faceted surface may correspond to a surface portion of a refractive lens, such as a convex or concave surface, and may be curved. In some examples, a facet may be planar and may approximate a surface portion of a refractive lens. For example, a planar faceted surface may have an orientation to the optic axis of the lens that varies with the average (e.g., mean) radial distance of the facet from the optical center of the lens. In this context, a structured optical element may include surface facets separated by steps, and at least one facet of a Fresnel lens may support a reflective polarizer. The filler material may then coat a surface of a Fresnel lens assembly (e.g., including facets, steps and the reflective polarizer). The filler layer may have a first surface having a profile that is complementary to the Fresnel lens assembly, and a second surface (e.g., an exterior surface) that may be a planar surface. In some examples, the second surface of the filler material may have a curved surface, such as a convex, concave, cylindrical, freeform, or other curved surface, or, in some examples, may include a second Fresnel lens structure.

In some examples, the steps between facets may have step heights and/or draft angles that may be a function of position within the optical element, for example, a function of radial distance from the optical center of a lens. In some examples, the gap between adjacent reflective polarizer segments may vary as a function of position within the optical element, such as a function of radial distance from the optical center of the lens In some examples, a Fresnel lens assembly includes at least one Fresnel lens and is configured to reflect a first polarization of light and transmit a second polarization of light. The Fresnel lens assembly may include a reflective polarizing layer disposed on the facets of the structured surface of a Fresnel lens.

In some examples, a structured optical element (e.g., a Fresnel lens) may include a substrate having at least two adjacent facets that are separated by a step (sometimes referred to as a riser), where the facets have facet surfaces, where a reflective polarizer layer is adjacent to and conforms to at least a portion of the facet surface of at least one of the facets.

In some examples, a lens may have an optical layer (e.g., a reflective polarizer, an absorbing polarizer, an optical retarder, an optical absorber or other optical layer) formed as a coating on a lens surface, such as one or more Fresnel lens facets. An optical layer may include a multilayer optical layer, a cholesteric liquid crystal or solid derived therefrom or having similar optical properties, an anisotropic layer or a layer including anisotropic electrical conductors.

In some examples, a Fresnel lens may include a reflective polarizer formed as a layer on one or more of the lens facets. The reflective polarizer may include a multilayer optical film, cholesteric liquid crystal, or an arrangement of anisotropic conductors. The facets and coating may be embedded in an optically clear layer, such as a filler polymer. The refractive indices and optical dispersions of the Fresnel lens material and the filler polymer may be selected to reduce chromatic aberration (e.g., colored fringes in the image). In some examples, optical materials (e.g., used in a Fresnel lens) may have a low birefringence (e.g., corresponding to less than a quarter wavelength optical retardance). In some examples, a Fresnel lens and/or filler polymer may include a silicone polymer such as polydimethylsiloxane (PDMS), cyclic olefin polymer (COP), cyclic olefin copolymer (COC), polyacrylate, polyurethane, or polycarbonate. For example, a PDMS Fresnel lens may be supported on a rigid substrate such as glass. Vapor deposition of coatings may lead to unwanted deposition on the risers between facets. Appropriately sectioned coating layers may be selectively located on the facets of a Fresnel lens using an elastomeric substrate. Fresnel lens supported reflective polarizers may be used in augmented-reality and/or virtual-reality (AR/VR) systems. Other components may include a display and a beamsplitter. In some examples, an AR/VR system may include a Fresnel lens supported beamsplitter, and lenses may be optimized separately. Fresnel lenses may be concave, convex, or may have complex optical profiles such as freeform surfaces. Wavelength-dependent properties may be adjusted by, for example, adjusting multilayer film configurations.

In some examples, a Fresnel lens may include a flexible and/or elastic material (e.g., a silicone polymer such as PDMS) and may be formed on an actuator, such as a multilayer actuator. In some examples, an actuator may be located between a relatively rigid substrate (e.g., glass or an acrylate polymer) and an elastomer-based Fresnel lens structure. Electrical signals applied to the actuator may be used to control the slope and/or shape of the facets of the Fresnel lens and hence the optical power of the Fresnel lens.

In some examples, the facets of a Fresnel lens and an optional optical layer formed thereon may be embedded in a filler layer such as an optically transparent filler polymer layer. For example, a filler layer may be formed supported by an assembly including the Fresnel lens and the polarizer. The filler layer may include an optically transparent polymer. The filler layer may have a structured surface complementary to the Fresnel lens and any other coating disposed thereon, and a second surface that may be generally smooth (e.g., planar, concave, or convex) or, in some examples, may be faceted to provide additional optical power (e.g., using a second Fresnel lens formed in the filler layer). The refractive indices and optical dispersions of the Fresnel lens material and the filler polymer may be selected to reduce chromatic aberration (e.g., colored fringes in the image). Preferably, optical materials have low birefringence (e.g., less than one quarter wavelength optical retardance for at least one visible wavelength). An example Fresnel lens and/or optional filler polymer (discussed in more detail below) may include a silicone polymer such as polydimethylsiloxane (PDMS), cyclic olefin polymer (COP), cyclic olefin copolymer (COC), polyacrylate, polyurethane, or polycarbonate. For example, a PDMS Fresnel lens may be supported on a rigid substrate such as glass. Vapor deposition of coatings may lead to unwanted deposition on the risers between facets.

In some examples, a lens may have a polarizer, such as a reflective polarizer or absorptive polarizer, formed as a layer on at least one of the lens surfaces. The layer may include a multilayer optical film, cholesteric liquid crystal, or an arrangement of anisotropic conductors such as a nanowire arrangement. In some examples, the lens may be a Fresnel lens and the facets and any layer(s) may be embedded in a filler layer that may include an optically clear polymer. In some examples, a filler layer may planarize or otherwise smooth an exterior surface of a Fresnel lens assembly. The refractive indices and optical dispersions of the lens material and any additional layers may be configured to reduce chromatic aberration (e.g., to reduce visually discernable colored fringes in an image of the display). In some examples, the filler polymer may be configured as a second Fresnel lens, a geometric lens, and/or diffractive lens. For example, the filler polymer may have a first surface having facets forming an interface with the first Fresnel lens, and a second surface such as a non-faceted surface (e.g., a planar surface or a curved surface such as a concave, convex, aspheric or freeform surface) or a faceted surface. In some examples, the filler polymer may form a diffractive lens including diffractive elements on one or both surfaces. In some examples, a reflector or reflective polarizer may be located between the facets of the first Fresnel lens and the filler polymer.

Appropriately sectioned coating layers (e.g., at least partially reflective layers such as reflectors, beamsplitters or reflective polarizers) may be selectively located on the facets of an optical element (e.g., a lens such as a Fresnel lens) using any suitable approach, for example, using an elastomeric substrate or other substrate to urge the coating layer against a surface of the optical element. For example, lens (e.g., Fresnel lens) supported reflective polarizers may be used in augmented-reality and/or virtual-reality (AR/VR) systems. Additional components may include a display and a beamsplitter.

In some examples, the reflective polarizer may be patterned to be in registration with the facets of the Fresnel lens. The patterned reflective polarizer may be formed on an elastomer element, aligned with the facets, and then the elastomer element may be moved (e.g., by an actuator) so that the patterned reflective polarizer is urged in contact with the facets of the Fresnel lens.

In some examples, an AR/VR system may include a Fresnel lens supported beamsplitter, and lenses may be optimized separately. Fresnel lenses may be concave, convex, or may have complex optical profiles such as freeform surfaces. Wavelength-dependent properties may be adjusted by, for example, adjusting multilayer film configurations.

In some examples, an optical configuration may be used to introduce a phase delay into one or more polarization components of a light ray. Examples include quarter wave plates and half wave plates. In some examples, an optical retarder may be used to convert circular polarization into a linear polarization or vice versa.

In some examples, a reflective polarizer may include a cholesteric liquid crystal, such as a polymer cholesteric liquid crystal, such as a cross-linked polymer cholesteric liquid crystal. In some examples, the reflective polarizer may include a birefringent multilayer reflective polarizer combined with a quarter wave retarder placed between the reflective polarizer and a second reflector (e.g., a beamsplitter or other reflective polarizer).

A beamsplitter may be configured to reflect a first portion of incident light and transmit a second portion of incident light. In some examples, a beamsplitter lens may include a lens (e.g., a Fresnel lens or other lens) and a beamsplitter formed on at least a portion of a lens surface or, for example, at an interface between components of a lens assembly.

In some examples, a beamsplitter may be formed on the surface of a lens, such as on the facets of a Fresnel lens, using one or more of various approaches. For example, a beamsplitter may be formed on an elastic element and urged against the surface of an optical component such as a lens. A beamsplitter may be formed on a substrate and patterned to form portions sized to match the facets of a Fresnel lens.

An example reflective layer may include one or more metals such as aluminum or silver, and may be metallic. An example reflective layer may include one or more dielectric materials such as silica, aluminum oxide, hafnium oxide, titanium dioxide, magnesium oxide, magnesium fluoride, indium tin oxide, indium gallium zinc oxide, and the like, and mixtures thereof. An example reflective layer may include one or more dielectric layers, and may include a Bragg grating structure or similar multilayer structure.

Reflective layers may be formed by one or a combination of processes including thin film physical vapor deposition, chemical vapor deposition, or other suitable processes for depositing reflective layers, such as highly and/or partially reflective thin film coatings.

An example beamsplitter may include one or more regions having different transmissivity and/or reflectance, and may include one or more reflective layers. An example beamsplitter may include first and second regions, having a different reflectance, for example, for visible light or at least one visible wavelength of light. A beamsplitter may include a coating formed on a surface of the lens, such as a metal coating and/or a dielectric coating such as a dielectric multilayer. In some examples, the reflectance of the beamsplitter may vary as a function of spatial position within the beamsplitter. For example, a beamsplitter may include a first region having a first reflectance and a second region having a second reflectance. In some examples, a beamsplitter may have a higher reflectance toward the edges of the beamsplitter than within a central region of the beamsplitter.

An example beamsplitter may include a coating that is partially transparent and partially reflective. An example beamsplitter may include a thin coating including a metal such as gold, aluminum or silver. A thin coating may have a coating thickness in the range of approximately 10 nm to approximately 500 nm. An example beamsplitter may include one or more layers, such as dielectric thin film layers. In some examples, a beamsplitter may include at least one dielectric material, for example, as a dielectric layer or component thereof, such as silica, aluminum oxide, hafnium oxide, titanium dioxide, magnesium oxide, magnesium fluoride, and the like. An example beamsplitter may include a coating including at least one thin metal coating and/or at least one dielectric coating. An example beamsplitter may include at least one of an electrically conductive material (e.g., a metal, an electrically conductive metal oxide such as, indium tin oxide or indium gallium zinc oxide, or other conductive material) and a dielectric material, and may include a combination of an electrically conductive material and a dielectric material (e.g., as a coating including at least one layer).

In some examples, a beamsplitter may be formed on a convex, planar, or concave surface of a lens. In some examples, the lens may include a Fresnel lens. In some examples, a polarized reflector may be configured to function as a beamsplitter and may, for example, be configured to reflect a first percentage of a first polarization of light and a second percentage of a second polarization of light, where the first and second percentages may be different, while transmitting some, most, or effectively all of the non-reflected light.

An example reflector (e.g., a beamsplitter, polarized reflector, or other reflector) may include at least a first and a second region, where the first region may include a central region of the reflector, and the second region may include an outer region of the reflector. In some examples, a reflector (e.g., a beamsplitter or a polarized reflector for a particular polarization) may have a reflectance of about 100%, about 95%, about 90%, about 85%, about 80%, about 75%, about 70%, or within a range between any two examples values of these example reflectance values. For example, the second region may have a reflectance between approximately 75% and approximately 100%, such as a reflectance between approximately 85% and approximately 100%. In some examples, the second region may have a higher reflectance than the first region, such as at least 10% higher reflectance. In some examples, the relationship between reflectance and distance may be a monotonic smooth curve. In some examples, the relationship between reflectance and distance may be discontinuous or include transition regions with relatively high rates of change in reflectance. In some examples, there may be a gradual transition in reflectance of the beamsplitter from the first region to the second region within a transition region. The transition region may have a width (which may be termed a transition distance) that may be less than about 5 mm, such as less than 2 mm, such as less than 1 mm. In some examples, the transition region width may be less than 0.1 mm, such as less than 0.01 mm.

In some examples, a reflector (e.g., a beamsplitter or polarized reflector) may include a layer that is partially transparent and partially reflective. In some examples, a reflector may include a metal film formed on a substrate, such as a substrate including one or more optical materials. For example, the layer may include a metal layer (e.g., having a thickness between about 5 nm and about 500 nm, such as a thickness between 10 nm and 200 nm), such as a layer including one or more metals such as aluminum, silver, gold, or other metal such as an alloy. The layer may include a multilayer, and may include a corrosion protection layer supported by the exposed surface of the layer (e.g., on a metal layer).

In some examples, a reflector may include one or more dielectric layers, such as dielectric thin film layers. Dielectric layers may include one or more dielectric layers such as oxide layers (e.g., metal oxide layers or other oxide layers), nitride layers, boride layers, phosphide layers, halide layers (e.g., metal halide layers such as metal fluoride layers), or other suitable layers. In some examples, the device may include one or more metal layers and/or one or more dielectric layers. A substrate may include glass or an optical polymer. In some examples, a reflector (e.g., a beamsplitter) may include a partially transparent and partially reflective layer. An example beamsplitter may include one or more thin metal layers such as aluminum or silver, one or more dielectric layers, such as layers having a layer thickness of approximately a quarter wavelength (e.g., for a visible wavelength such as 550 nm at an operational temperature such as 20 °C). In some examples, a reflector may include alternating layers of relatively higher and lower refractive indices. A multilayer may include a plurality of layers having thicknesses of approximately one quarter wavelength. A multilayer may include one or more materials such as magnesium fluoride (e.g., MgF₂), silica (SiO₂), hafnium oxide (e.g., HfO₂), titanium oxide (e.g., TiO₂), zirconium oxide (e.g., ZrO₂), other oxides (e.g., metal oxides such as transition metal oxides, non-metal oxides, and the like), glasses (e.g., oxide glasses such as silicate glasses, fluoride glasses or other glasses), sol-gel layers, ormosils, other silicon-containing materials, other materials and combinations thereof.

In some examples, a reflective polarizer coating may include a multilayer birefringent reflective polarizer, a cholesteric reflective polarizer, a solid crystal reflective polarizer, a wire grid polarizer, an anisotropic arrangement of electrically conductive nanoparticles or microparticles (e.g. nanorods, microrods, nanowires, microwires, and the like, for example, including a metal and/or semiconductor material), an aligned conductive material (e.g. an aligned conductive polymer or composite), other material, or combination thereof.

In some examples, an apparatus may include a display, at least one Fresnel lens assembly including a polarized reflector, and optionally a beamsplitter lens including a beamsplitter. The reflectance of the beamsplitter and/or the polarized reflector may vary as a function of spatial position; for example, including a first region of relatively high optical transmission and a second region of relatively low optical transmission (e.g., of relatively higher reflectance). In this context, a segmented reflector may have at least two regions having different optical properties, such as regions of different values of reflectance, for example, for one or more visible wavelengths.

In some examples, a device may include a reflector having a gradual or effectively discontinuous transition in the reflectance of the reflector from the first region to the second region. A transition region may be located between the first region and the second region. As measured along a particular direction (e.g., a radial direction, normal to the periphery of the first region, or other direction) the transition region may extend over a transition distance between the first region and the second region. In some examples, the transition distance may have a length that is approximately or less than 5 mm, 1 mm, 0.1 mm, or 0.01 mm.

In some examples, a reflector may provide selective reflection over a particular wavelength range and/or for a particular polarization. For example, a reflector may include a Bragg reflector, and layer composition and/or dimensions may be configured to provide a desired bandwidth of operation.

In some examples, a reflector may be formed on an optical substrate such as a lens, and a combination of a lens and a reflector may be termed a reflector lens. A reflector lens may include an optical element having at least one curved surface. A reflector may include a reflective coating formed on or otherwise supported by a planar or a curved surface of an optical element such as a lens.

During fabrication of a reflector, different reflector regions having different values of optical reflectance may be defined by a masked deposition processes or using photolithography, or a combination thereof.

In some examples, a lens (such as a Fresnel lens) may include a surface such as a concave surface, a convex surface or a planar surface. In some examples, a device may include one or more converging lenses and/or one or more diverging lenses. An optical configuration may include one or more lenses and may be configured to form an image of at least part of the display at an eyebox. A device may be configured so that an eye of a user is located within the eyebox when the device is worn by the user. In some examples, a lens may include a Fresnel lens having facets formed on a substrate including an optical material. In some examples, an optical configuration may include one or more reflectors, such as mirrors and/or reflectors.

In some examples, apparatus efficiency may be increased using a pancake lens including a beamsplitter that has higher reflectance toward the edges of the beamsplitter than within a central region of the beamsplitter. Lens efficiency may be increased using a polarization-converting beamsplitter lens including a beamsplitter that has higher reflectivity toward the edges of the lens than within a central region of the lens. In some examples, a pancake lens may include a refractive lens and a beamsplitter that may be formed as a reflective coating on a surface of the lens. The reflective coating may have a spatially varying reflectance. In some examples, a pancake lens may include a polarization-converting beamsplitter lens.

In some examples, an apparatus may include a display (e.g., a display panel) and a folded optic lens. Light from the display that is incident on the optical configuration may be circularly polarized, linearly polarized, elliptically polarized or otherwise polarized. In some examples, the display may be an emissive display or may include a backlight. An emissive display may include a light-emitting diode (LED) array, such as an OLED (organic light-emitting diode) array. In some examples, an LED array may include a microLED array, and the LEDs may have a pitch of approximately or less than 100 microns (e.g., approximately or less than 50 microns, approximately or less than 20 microns, approximately or less than 10 microns, approximately or less than 5 microns, approximately or less than 2 microns, approximately or less than 1 microns, or other pitch value).

In some examples, the display may emit polarized light, such as linearly polarized light or circularly polarized light. In some examples, the display may emit linear polarized light and an optical retarder may be used to convert the linear polarization to an orthogonal linear polarization. In some examples, the combination of an optical retarder and a linear reflective polarizer may be replaced with an alternative configuration, such as a circularly polarized reflective polarizer which may include a cholesteric liquid crystal reflective polarizer.

In some examples, the display may include a transmissive display (such as a liquid crystal display) and a light source, such as a backlight. In some examples, the display may include a spatial light modulator and a light source. An example spatial light modulator may include a reflective or transmissive switchable liquid crystal array.

In some examples, an apparatus may include a display configured to provide polarized light, such as circularly polarized light. A display may include an emissive display (e.g., a light-emitting display) or a display (e.g., a liquid crystal display) used in combination with a backlight.

In some examples, display light from the display incident on the beamsplitter lens is circularly polarized. The display may include an emissive display (such as a light-emitting diode display) or a light-absorbing panel (such as a liquid crystal panel) in combination with a backlight. An emissive display may include at least one LED array, such as an organic LED (OLED) array. An LED array may include a microLED array. An LED array may include LEDs having a pitch of less than about 100 microns (e.g., about 50 microns, about 20 microns, about 10 microns, about 5 microns, about 2 microns, or about 1 microns, etc.).

In some examples, a display may include a spatial light modulator and a light source (e.g., a backlight). A spatial light modulator may include a reflective or transmissive switchable liquid crystal array. In some examples, the light source (e.g., a backlight) may have and/or allow a spatial variation of illumination intensity over the display. In some examples, the light source may include a scanned source such as a scanned laser. In some examples, the light source may include an arrangement of light emissive elements, such as an array of light emissive elements. An array of light emissive elements may include an array of miniLED and/or microLED emissive elements.

In some examples, a display may include one or more waveguide displays A waveguide display may include a polychromatic display or an arrangement of monochromatic displays. A waveguide display may be configured to project display light from one or more waveguides into an optical configuration configured to form an image of at least part of the display at the eyebox.

In some examples, the display brightness may be spatially varied to increase the imaged display brightness uniformity by at least, for example, about 10%, for example, about 20%, for example, about 30%, for example, about 40%, or by some other value. The display illumination variation may be dynamically controlled, for example, by a controller. In some examples, the dynamic illumination variation may be adjusted by a controller receiving eye tracking signals provided by an eye tracking system.

In some examples, the display may have a spatially adjustable brightness (e.g., a spatial variation in illumination intensity). In some examples, the adjustable brightness may be achieved by spatially varying the brightness of an emissive display or of a backlight. The display brightness and/or any spatial variation may be adjustable, for example, by a control circuit. In some examples, the light source may include a scannable light source, such as a laser. In some examples, the light source may include an array of light sources, such as an LED backlight. For example, the array of light sources may include a miniLED or microLED array. The display illumination may be spatially varied to increase the imaged display brightness uniformity by at least about 10% (e.g., about 20%, about 30%, about 40%, or other value). The spatial variation of illumination from the backlight may be dynamically adjusted, and the dynamic adjustment may be controlled by an eye tracking system.

In some example, an apparatus may include one or more actuators. For example, one or more actuators may be used to adjust the position of at least one optical component along one or more translational and/or rotational directions. In some examples, at least one actuator may be used to adjust the optical power of a lens and/or to adjust the position, conformation, or other parameter of a first optical element relative to that of a second optical element or display.

In some examples, an optical element and/or actuator may include at least one layer including a piezoelectric polymer, such as a piezoelectric fluoropolymer. Example fluoropolymers may include PVDF (polyvinylidene difluoride), PVDF analogs, derivatives, copolymers, blends and composites thereof, such as a copolymer of PVDF, for example, PVDF-TrFE (poly(vinylidene fluoride-co-trifluoroethylene) or PVDF-TrFE-CTFE (poly(vinylidene fluoride-trifluoroethylene-chlorotrifluoroethylene terpolymer). In this context, a copolymer may include terpolymers and the like. In some examples, at least one layer of an actuator may include an oriented piezoelectric polymer such as an oriented fluoropolymer, for example, a poled fluoropolymer or mechanically aligned fluoropolymer. In some examples, an actuator may include at least one layer including electrostrictive polymer such as polyacrylates and silicone elastomers, such as polydimethylsiloxane (PDMS). In some examples, an electrostrictive polymer such as PDMS may have a low value of birefringence and may be used without additional layers for polarization control. In this context, a low value of birefringence may be approximately equal to or less than 0.05, such as approximately equal to or less than 0.01.

An actuator may include one or more actuator materials, such as one or more ceramic piezoelectric actuator materials, that may include one or more of; lead magnesium niobium oxide, lead zinc niobium oxide, lead scandium tantalum oxide, lead lanthanum zirconium titanium oxide, barium titanium zirconium oxide, barium titanium tin oxide, lead magnesium titanium oxide, lead scandium niobium oxide, lead indium niobium oxide, lead indium tantalum oxide, lead iron niobium oxide, lead iron tantalum oxide, lead zinc tantalum oxide, lead iron tungsten oxide, barium strontium titanium oxide, barium zirconium oxide, bismuth magnesium niobium oxide, bismuth magnesium tantalum oxide, bismuth zinc niobium oxide, bismuth zinc tantalum oxide, lead ytterbium niobium oxide, lead ytterbium tantalum oxide, strontium titanium oxide, bismuth titanium oxide, calcium titanium oxide, lead magnesium niobium titanium oxide, lead magnesium niobium titanium zirconium oxide, lead zinc niobium titanium oxide, lead zinc niobium titanium zirconium oxide as well as any of the previous mixed with any of the previous and/or traditional ferroelectrics including lead titanium oxide, lead zirconium titanium oxide, barium titanium oxide, bismuth iron oxide, sodium bismuth titanium oxide, lithium tantalum oxide, sodium potassium niobium oxide and lithium niobium oxide. Examples further include lead titanate, lead zirconate, lead zirconate titanate, lead magnesium niobate, lead magnesium niobate-lead titanate, lead zinc niobate, lead zinc niobate-lead titanate, lead magnesium tantalate, lead indium niobate, lead indium tantalate, barium titanate, lithium niobate, potassium niobate, sodium potassium niobate, bismuth sodium titanate, or bismuth ferrite.

In some examples, an actuator may include a piezoelectric actuator, for example, including a piezoelectric material such as a crystalline or ceramic material. In some examples, polycrystalline or amorphous materials may be electrically poled or otherwise aligned. Example actuators may include an actuator material such as one or more of piezoelectric materials. One or more of the above-listed example actuator materials may also be used as an optical material, a layer (e.g., of an optical component) or a substrate material (e.g., as a substrate for a beamsplitter). In some examples, an actuator may be configured to adjust the position and/or conformation of an optical element, such as a lens, for example, an adjustable fluid lens such as an adjustable liquid lens.

In some examples, an apparatus may include a display and an optical configuration configured to provide an image of a display, for example, in a head-mounted device. The optical configuration may include one or more lenses, such as a Fresnel lens assembly including a Fresnel lens and a reflective polarizer. A reflective polarizer may be configured to reflect a first polarization and transmit a second polarization of incident light. The optical configuration may form an image of the display viewable by a user when the user wears the apparatus. Applications may also include imaging, display, or photovoltaic systems.

In some examples, an apparatus may include a display and an optical configuration configured to provide an image of a display, for example, in a head-mounted device. An example apparatus may include a display and an optical configuration including a first lens assembly and a second lens assembly. The first lens assembly may include a first lens, a first reflector, at least one Fresnel surface formed in an optical element such as a lens or substrate, and, in some examples, an actuator. The second lens assembly may include a second lens and a second reflector. In some examples, an apparatus may include a controller configured to apply at least one electrical signal to the actuator to control the optical power of the first lens. The display light may pass through the actuator, which may be transparent and may include a plurality of actuator layers.

In some examples, an apparatus (e.g., including an AR/VR head-mounted device) may include a display and an optical system configured to provide an image of the display at the eyebox. An optical configuration may include a transmissive Fresnel lens supported by a lens surface, such as the lens surface closest to the display. In some examples, the optical system may include a reflective polarizer and/or a beamsplitter coated Fresnel lens. Example optical systems may allow an increased brightness uniformity and a reduction of device weight and dimensions. An example device may avoid brightness reductions outside the center field of view that may be associated with compact folded optical systems, for example, using a Fresnel lens to divert normal rays from the near the edge of a display towards the eyebox. The Fresnel lens may further allow the underlying lens to have a non-spherical surface, such as a conic surface. Example optical systems may also help eliminate optical artifacts by reducing the visibility of the Fresnel facets and/or the steps between the facets. In some examples, reflective layer coated facets may be immersed in an index-matched layer so that the Fresnel steps are no longer visible. For example, a Fresnel reflector may be located between a pair of Fresnel lenses having complementary structured surfaces that each match the configuration of the Fresnel reflector. Examples also include related devices, methods, systems and computer-readable media.

FIG. 12 shows an example control system that may be used in exemplary devices according to some embodiments. Control system 1200 may include a near-eye display (NED) 1210 (e.g., part of a head-mounted device) and a control system 1220, that may be communicatively coupled to each other. The near-eye display 1210 may include adjustable lenses 1212, electroactive devices 1214, displays 1216 and a sensor 1218. Control system 1220 may include a control element 1222, a force lookup table 1224 and augmented reality logic 1226.

Augmented reality logic 1226 may determine what virtual objects are to be displayed and real-world positions onto which the virtual objects are to be projected. Augmented reality logic 1226 may generate an image stream 1228 that is displayed by displays 1216 in such a way that alignment of right- and left-side images displayed in displays 1216 results in ocular vergence toward a desired real-world position. In some examples, electrical signals may be applied to an actuator to adjust the accommodation distance to match the vergence distance. An actuator may be used to deform a Fresnel surface, for example, by bending and/or stretching the Fresnel surface, to modify an optical parameter such as an optical power and/or a radius of curvature (if applicable).

The control element 1222 (which may be referred to as a controller) may be configured to control at least one adjustable lens, for example, a fluid lens located within a near-eye display. Lens adjustment may be based on the desired perceived distance to a virtual object (this may, for example, include augmented reality image elements).

Control element 1222 may use the same positioning information determined by augmented reality logic 1226, in combination with force lookup table (LUT) 1224, to determine an amount of force to be applied by electroactive devices 1214 (e.g., actuators), as described herein, to adjustable lenses 1212. Electroactive devices 1214 may, responsive to control element 1222, apply appropriate forces to adjustable lenses 1212 to adjust the apparent accommodation distance of virtual images displayed in displays 1216 to match the apparent vergence distance of the virtual images, thereby reducing or eliminating vergence-accommodation conflict. Control element 1222 may be in communication with sensor 1218, that may measure a state of the adjustable lens. Based on data received from sensor 1218, the control element 1222 may adjust electroactive devices 1214 (e.g., as a closed-loop control system).

In some embodiments, control system 1200 may display multiple virtual objects at once and may determine which virtual object a user is viewing (or is likely to be viewing) to identify a virtual object for which to correct the apparent accommodation distance. For example, the system may include an eye-tracking system (not shown) that provides information to control element 1222 to enable control element 1222 to select the position of the relevant virtual object and may be used to modify the accommodation distance by adjusting one or more lens optical powers.

Additionally or alternatively, augmented reality logic 1226 may provide information about which virtual object is the most important and/or most likely to draw the attention of the user (e.g., based on spatial or temporal proximity, movement and/or a semantic importance metric attached to the virtual object). In some embodiments, the augmented reality logic 1226 may identify multiple potentially important virtual objects and select an apparent accommodation distance that approximates the virtual distance of a group of the potentially important virtual objects.

Control system 1220 may represent any suitable hardware, software, or combination thereof for managing adjustments to adjustable lenses 1212. In some embodiments, control system 1220 may represent a system on a chip (SOC). As such, at least one portion of control system 1220 may include one or more hardware modules. Additionally or alternatively, at least one portion of control system 1220 may include one or more software modules that perform at least one of the tasks described herein when stored in the memory of a computing device and executed by a hardware processor of the computing device.

Control system 1220 may generally represent any suitable system for providing display data, augmented reality data and/or augmented reality logic for a head-mounted display. In some embodiments, a control system 1220 may include a graphics processing unit (GPU) and/or any other type of hardware accelerator designed to optimize graphics processing.

Control system 1220 may be implemented in various types of systems, such as augmented reality glasses. A control system may be used to control operation of at least one of a display, a light source, an adjustable lens, image rendering, sensor analysis and the like. In some embodiments, a control system may be integrated into a frame of an eyewear device. Alternatively, all or a portion of control system may be in a system remote from the eyewear, and, for example, configured to control electroactive devices (e.g., actuators), display components, or other optical components in the eyewear via wired or wireless communication.

The control system, which in some examples may also be referred to as a controller, may control the operations of the light source and, in some cases, the optics system, that may include control of at least one lens. In some embodiments, the controller may be the graphics processing unit (GPU) of a display device. In some embodiments, the controller may include at least one different or additional processors. The operations performed by the controller may include taking content for display and dividing the content into discrete sections. The controller may instruct the light source to sequentially present the discrete sections using light emitters corresponding to a respective row in an image ultimately displayed to the user. The controller may instruct the optics system to adjust the light. For example, the controller may control the optics system to scan the presented discrete sections to different areas of a coupling element of the light output. Each discrete portion may be presented in a different location at the exit pupil. While each discrete section is presented at different times, the presentation and scanning of the discrete sections may occur fast enough such that a user's eye integrates the different sections into a single image or series of images. The controller may also provide scanning instructions to the light source that include an address corresponding to an individual source element of the light source and/or an electrical bias applied to an individual source or display element.

An example control system (that may also be termed a controller) may include an image processing unit. The controller, or component image processing unit, may include a general-purpose processor and/or at least one application-specific circuit that is dedicated to performing the features described herein. In one embodiment, a general-purpose processor may be coupled to a memory device to execute software instructions that cause the processor to perform certain processes described herein. In some embodiments, the image processing unit may include at least one circuit that is dedicated to performing certain features. The image processing unit may be a stand-alone unit that is separate from the controller and the driver circuit, but in some embodiments the image processing unit may be a sub-unit of the controller or the driver circuit. In other words, in those embodiments, the controller or the driver circuit performs various image processing procedures of the image processing unit. The image processing unit may also be referred to as an image processing circuit.

Ophthalmic applications of the devices described herein may include spectacles with a flat front (or other curved) substrate and an adjustable eye-side concave or convex membrane surface. Applications include optics, augmented-reality apparatus or virtual-reality apparatus (e.g., headsets). Example devices may include head-mounted-display devices such as augmented-reality apparatus and/or virtual-reality apparatus.

An example control system may be used to provide at least one of the following functions: to control the image displayed by the device, receive an analyze sensor data, or to adjust at least one adjustable lenses. In some examples, a control system may include a display system, and may be used to adjust an image shown on a display. In some examples, a control system may be used to adjust the optical properties of at least one optical element, such as the focal length of a lens, the orientation of an optical element, the stretching of a layer (such as an elastic layer, e.g., an elastic Fresnel lens), or to adjust any other optical component. In some examples, a control system may be used to adjust the light output power of a light source, for example, in response to ambient brightness, the importance of an augmented reality or virtual reality image element, or to achieve a user-controlled setting such as contrast ratio or brightness.

Embodiments of the present disclosure may include or be implemented in conjunction with various types of artificial reality systems. Artificial reality is a form of reality that has been adjusted in some manner before presentation to a user, which may include, for example, a virtual reality, an augmented reality, a mixed reality, a hybrid reality, or some combination and/or derivative thereof. Artificial-reality content may include completely computer-generated content or computer-generated content combined with captured (e.g., real-world) content. The artificial-reality content may include video, audio, haptic feedback, or some combination thereof, any of which may be presented in a single channel or in multiple channels (such as stereo video that produces a three-dimensional (3D) effect to the viewer). Additionally, in some embodiments, artificial reality may also be associated with applications, products, accessories, services, or some combination thereof, that are used to, for example, create content in an artificial reality and/or are otherwise used in (e.g., to perform activities in) an artificial reality.

Artificial-reality systems may be implemented in a variety of different form factors and configurations. Some artificial reality systems may be designed to work without near-eye displays (NEDs). Other artificial reality systems may include an NED that also provides visibility into the real world (such as, e.g., augmented-reality system 1300 in FIG. 13) or that visually immerses a user in an artificial reality (such as, e.g., virtual-reality system 1400 in FIG. 14). While some artificial-reality devices may be self-contained systems, other artificial-reality devices may communicate and/or coordinate with external devices to provide an artificial reality experience to a user. Examples of such external devices include handheld controllers, mobile devices, desktop computers, devices worn by a user, devices worn by one or more other users, and/or any other suitable external system.

Turning to FIG. 13, augmented-reality system 1300 may include an eyewear device 1302 with a frame 1310 configured to hold a left display device 1315(A) and a right display device 1315(B) in front of a user's eyes. Display devices 1315(A) and 1315(B) may act together or independently to present an image or series of images to a user. While augmented-reality system 1300 includes two displays, embodiments of this disclosure may be implemented in augmented-reality systems with a single NED or more than two NEDs.

In some embodiments, augmented-reality system 1300 may include one or more sensors, such as sensor 1340. Sensor 1340 may generate measurement signals in response to motion of augmented-reality system 1300 and may be located on substantially any portion of frame 1310. Sensor 1340 may represent one or more of a variety of different sensing mechanisms, such as a position sensor, an inertial measurement unit (IMU), a depth camera assembly, a structured light emitter and/or detector, or any combination thereof. In some embodiments, augmented-reality system 1300 may or may not include sensor 1340 or may include more than one sensor. In embodiments in which sensor 1340 includes an IMU, the IMU may generate calibration data based on measurement signals from sensor 1340. Examples of sensor 1340 may include, without limitation, accelerometers, gyroscopes, magnetometers, other suitable types of sensors that detect motion, sensors used for error correction of the IMU, or some combination thereof.

In some examples, augmented-reality system 1300 may also include a microphone array with a plurality of acoustic transducers 1320(A)-1320(J), referred to collectively as acoustic transducers 1320. Acoustic transducers 1320 may represent transducers that detect air pressure variations induced by sound waves. Each acoustic transducer 1320 may be configured to detect sound and convert the detected sound into an electronic format (e.g., an analog or digital format). The microphone array in FIG. 13 may include, for example, ten acoustic transducers: 1320(A) and 1320(B), which may be designed to be placed inside a corresponding ear of the user, acoustic transducers 1320(C), 1320(D), 1320(E), 1320(F), 1320(G), and 1320(H), which may be positioned at various locations on frame 1310, and/or acoustic transducers 1320(1) and 1320(J), which may be positioned on a corresponding neckband 1305.

In some embodiments, one or more of acoustic transducers 1320(A)-(J) may be used as output transducers (e.g., speakers). For example, acoustic transducers 1320(A) and/or 1320(B) may be earbuds or any other suitable type of headphone or speaker.

The configuration of acoustic transducers 1320 of the microphone array may vary. While augmented-reality system 1300 is shown in FIG. 13 as having ten acoustic transducers 1320, the number of acoustic transducers 1320 may be greater or less than ten. In some embodiments, using higher numbers of acoustic transducers 1320 may increase the amount of audio information collected and/or the sensitivity and accuracy of the audio information. In contrast, using a lower number of acoustic transducers 1320 may decrease the computing power required by an associated controller 1350 to process the collected audio information. In addition, the position of each acoustic transducer 1320 of the microphone array may vary. For example, the position of an acoustic transducer 1320 may include a defined position on the user, a defined coordinate on frame 1310, an orientation associated with each acoustic transducer 1320, or some combination thereof.

Acoustic transducers 1320(A) and 1320(B) may be positioned on different parts of the user's ear, such as behind the pinna, behind the tragus, and/or within the auricle or fossa. Or, there may be additional acoustic transducers 1320 on or surrounding the ear in addition to acoustic transducers 1320 inside the ear canal. Having an acoustic transducer 1320 positioned next to an ear canal of a user may enable the microphone array to collect information on how sounds arrive at the ear canal. By positioning at least two of acoustic transducers 1320 on either side of a user's head (e.g., as binaural microphones), augmented-reality system 1300 may simulate binaural hearing and capture a 3D stereo sound field around about a user's head. In some embodiments, acoustic transducers 1320(A) and 1320(B) may be connected to augmented-reality system 1300 via a wired connection 1330, and in other embodiments acoustic transducers 1320(A) and 1320(B) may be connected to augmented-reality system 1300 via a wireless connection (e.g., a BLUETOOTH connection). In still other embodiments, acoustic transducers 1320(A) and 1320(B) may not be used at all in conjunction with augmented-reality system 1300.

Acoustic transducers 1320 on frame 1310 may be positioned in a variety of different ways, including along the length of the temples, across the bridge, above or below display devices 1315(A) and 1315(B), or some combination thereof. Acoustic transducers 1320 may also be oriented such that the microphone array is able to detect sounds in a wide range of directions surrounding the user wearing the augmented-reality system 1300. In some embodiments, an optimization process may be performed during manufacturing of augmented-reality system 1300 to determine relative positioning of each acoustic transducer 1320 in the microphone array.

In some examples, augmented-reality system 1300 may include or be connected to an external device (e.g., a paired device), such as neckband 1305. Neckband 1305 generally represents any type or form of paired device. Thus, the following discussion of neckband 1305 may also apply to various other paired devices, such as charging cases, smart watches, smart phones, wrist bands, other wearable devices, hand-held controllers, tablet computers, laptop computers, other external computer devices, etc.

As shown, neckband 1305 may be coupled to eyewear device 1302 via one or more connectors. The connectors may be wired or wireless and may include electrical and/or non-electrical (e.g., structural) components. In some cases, eyewear device 1302 and neckband 1305 may operate independently without any wired or wireless connection between them. While FIG. 13 illustrates the components of eyewear device 1302 and neckband 1305 in example locations on eyewear device 1302 and neckband 1305, the components may be located elsewhere and/or distributed differently on eyewear device 1302 and/or neckband 1305. In some embodiments, the components of eyewear device 1302 and neckband 1305 may be located on one or more additional peripheral devices paired with eyewear device 1302, neckband 1305, or some combination thereof.

Pairing external devices, such as neckband 1305, with augmented-reality eyewear devices may enable the eyewear devices to achieve the form factor of a pair of glasses while still providing sufficient battery and computation power for expanded capabilities. Some or all of the battery power, computational resources, and/or additional features of augmented-reality system 1300 may be provided by a paired device or shared between a paired device and an eyewear device, thus reducing the weight, heat profile, and form factor of the eyewear device overall while still retaining desired functionality. For example, neckband 1305 may allow components that would otherwise be included on an eyewear device to be included in neckband 1305 since users may tolerate a heavier weight load on their shoulders than they would tolerate on their heads. Neckband 1305 may also have a larger surface area over which to diffuse and disperse heat to the ambient environment. Thus, neckband 1305 may allow for greater battery and computation capacity than might otherwise have been possible on a stand-alone eyewear device. Since weight carried in neckband 1305 may be less invasive to a user than weight carried in eyewear device 1302, a user may tolerate wearing a lighter eyewear device and carrying or wearing the paired device for greater lengths of time than a user would tolerate wearing a heavy standalone eyewear device, thereby enabling users to more fully incorporate artificial reality environments into their day-to-day activities.

Neckband 1305 may be communicatively coupled with eyewear device 1302 and/or to other devices. These other devices may provide certain functions (e.g., tracking, localizing, depth mapping, processing, storage, etc.) to augmented-reality system 1300. In the embodiment of FIG. 13, neckband 1305 may include two acoustic transducers (e.g., 1320(1) and 1320(J)) that are part of the microphone array (or potentially form their own microphone subarray). Neckband 1305 may also include a controller 1325 and a power source 1335.

Acoustic transducers 1320(l) and 1320(J) of neckband 1305 may be configured to detect sound and convert the detected sound into an electronic format (analog or digital). In the embodiment of FIG. 13, acoustic transducers 1320(l) and 1320(J) may be positioned on neckband 1305, thereby increasing the distance between the neckband acoustic transducers 1320(l) and 1320(J) and other acoustic transducers 1320 positioned on eyewear device 1302. In some cases, increasing the distance between acoustic transducers 1320 of the microphone array may improve the accuracy of beamforming performed via the microphone array. For example, if a sound is detected by acoustic transducers 1320(C) and 1320(D) and the distance between acoustic transducers 1320(C) and 1320(D) is greater than, for example, the distance between acoustic transducers 1320(D) and 1320(E), the determined source location of the detected sound may be more accurate than if the sound had been detected by acoustic transducers 1320(D) and 1320(E).

Controller 1325 of neckband 1305 may process information generated by the sensors on neckband 1305 and/or augmented-reality system 1300. For example, controller 1325 may process information from the microphone array that describes sounds detected by the microphone array. For each detected sound, controller 1325 may perform a direction-of-arrival (DOA) estimation to estimate a direction from which the detected sound arrived at the microphone array. As the microphone array detects sounds, controller 1325 may populate an audio data set with the information. In embodiments in which augmented-reality system 1300 includes an inertial measurement unit, controller 1325 may compute all inertial and spatial calculations from the IMU located on eyewear device 1302. A connector may convey information between augmented-reality system 1300 and neckband 1305 and between augmented-reality system 1300 and controller 1325. The information may be in the form of optical data, electrical data, wireless data, or any other transmittable data form. Moving the processing of information generated by augmented-reality system 1300 to neckband 1305 may reduce weight and heat in eyewear device 1302, making it more comfortable for the user.

Power source 1335 in neckband 1305 may provide power to eyewear device 1302 and/or to neckband 1305. Power source 1335 may include, without limitation, lithium ion batteries, lithium-polymer batteries, primary lithium batteries, alkaline batteries, or any other form of power storage. In some cases, power source 1335 may be a wired power source. Including power source 1335 on neckband 1305 instead of on eyewear device 1302 may help better distribute the weight and heat generated by power source 1335.

As noted, some artificial reality systems may, instead of blending an artificial reality with actual reality, substantially replace one or more of a user's sensory perceptions of the real world with a virtual experience. One example of this type of system is a head-worn display system, such as virtual-reality system 1400 in FIG. 14, that mostly or completely covers a user's field of view. Virtual-reality system 1400 may include a front rigid body 1402 and a band 1404 shaped to fit around a user's head. Virtual-reality system 1400 may also include output audio transducers 1406(A) and 1406(B). Furthermore, while not shown in FIG. 14, front rigid body 1402 may include one or more electronic elements, including one or more electronic displays, one or more inertial measurement units (IMUs), one or more tracking emitters or detectors, and/or any other suitable device or system for creating an artificial reality experience.

Artificial reality systems may include a variety of types of visual feedback mechanisms. For example, display devices in augmented-reality system 1300 and/or virtual-reality system 1400 may include one or more liquid crystal displays (LCDs), light emitting diode (LED) displays, microLED displays, organic LED (OLED) displays, digital light projector (DLP) micro-displays, liquid crystal on silicon (LCoS) micro-displays, and/or any other suitable type of display screen. These artificial reality systems may include a single display screen for both eyes or may provide a display screen for each eye, which may allow for additional flexibility for varifocal adjustments or for correcting a user's refractive error. Some of these artificial reality systems may also include optical subsystems having one or more lenses (e.g., concave or convex lenses, Fresnel lenses, adjustable liquid lenses, etc.) through which a user may view a display screen. These optical subsystems may serve a variety of purposes, including to collimate (e.g., make an object appear at a greater distance than its physical distance), to magnify (e.g., make an object appear larger than its actual size), and/or to relay (to, e.g., the viewer's eyes) light. These optical subsystems may be used in a non-pupil-forming architecture (such as a single lens configuration that directly collimates light but results in so-called pincushion distortion) and/or a pupil-forming architecture (such as a multi-lens configuration that produces so-called barrel distortion to nullify pincushion distortion).

In addition to or instead of using display screens, some of the artificial reality systems described herein may include one or more projection systems. For example, display devices in augmented-reality system 1300 and/or virtual-reality system 1400 may include micro-LED projectors that project light (using, e.g., a waveguide) into display devices, such as clear combiner lenses that allow ambient light to pass through. The display devices may refract the projected light toward a user's pupil and may enable a user to simultaneously view both artificial reality content and the real world. The display devices may accomplish this using any of a variety of different optical components, including waveguide components (e.g., holographic, planar, diffractive, polarized, and/or reflective waveguide elements), light-manipulation surfaces and elements (such as diffractive, reflective, and refractive elements and gratings), coupling elements, etc. Artificial reality systems may also be configured with any other suitable type or form of image projection system, such as retinal projectors used in virtual retina displays.

The artificial reality systems described herein may also include various types of computer vision components and subsystems. For example, augmented-reality system 1300 and/or virtual-reality system 1400 may include one or more optical sensors, such as two-dimensional (2D) or 3D cameras, structured light transmitters and detectors, time-of-flight depth sensors, single-beam or sweeping laser rangefinders, 3D LiDAR sensors, and/or any other suitable type or form of optical sensor. An artificial reality system may process data from one or more of these sensors to identify a location of a user, to map the real world, to provide a user with context about real-world surroundings, and/or to perform a variety of other functions.

The artificial reality systems described herein may also include one or more input and/or output audio transducers. Output audio transducers may include voice coil speakers, ribbon speakers, electrostatic speakers, piezoelectric speakers, bone conduction transducers, cartilage conduction transducers, tragus-vibration transducers, and/or any other suitable type or form of audio transducer. Similarly, input audio transducers may include condenser microphones, dynamic microphones, ribbon microphones, and/or any other type or form of input transducer. In some embodiments, a single transducer may be used for both audio input and audio output.

In some embodiments, the artificial reality systems described herein may also include tactile (i.e., haptic) feedback systems, which may be incorporated into headwear, gloves, body suits, handheld controllers, environmental devices (e.g., chairs, floormats, etc.), and/or any other type of device or system. Haptic feedback systems may provide various types of cutaneous feedback, including vibration, force, traction, texture, and/or temperature. Haptic feedback systems may also provide various types of kinesthetic feedback, such as motion and compliance. Haptic feedback may be implemented using motors, piezoelectric actuators, fluidic systems, and/or a variety of other types of feedback mechanisms. Haptic feedback systems may be implemented independent of other artificial reality devices, within other artificial reality devices, and/or in conjunction with other artificial reality devices.

By providing haptic sensations, audible content, and/or visual content, artificial reality systems may create an entire virtual experience or enhance a user's real-world experience in a variety of contexts and environments. For instance, artificial reality systems may assist or extend a user's perception, memory, or cognition within a particular environment. Some systems may enhance a user's interactions with other people in the real world or may enable more immersive interactions with other people in a virtual world. Artificial reality systems may also be used for educational purposes (e.g., for teaching or training in schools, hospitals, business enterprises, etc.), entertainment purposes (e.g., for playing video games, listening to music, watching video content, etc.), and/or for accessibility purposes (e.g., as hearing aids, visual aids, etc.). The embodiments disclosed herein may enable or enhance a user's artificial reality experience in one or more of these contexts and environments and/or in other contexts and environments.

As detailed above, the computing devices and systems described and/or illustrated herein broadly represent any type or form of computing device or system capable of executing computer-readable instructions, such as those contained within the modules described herein. In their most basic configuration, these computing device(s) may each include at least one memory device and at least one physical processor.

In some examples, the term "memory device" generally refers to any type or form of volatile or non-volatile storage device or medium capable of storing data and/or computer-readable instructions. In one example, a memory device may store, load, and/or maintain one or more of the modules described herein. Examples of memory devices include, without limitation, Random Access Memory (RAM), Read Only Memory (ROM), flash memory, Hard Disk Drives (HDDs), Solid-State Drives (SSDs), optical disk drives, caches, variations or combinations of one or more of the same, or any other suitable storage memory.

In some examples, the term "physical processor" generally refers to any type or form of hardware-implemented processing unit capable of interpreting and/or executing computer-readable instructions. In one example, a physical processor may access and/or modify one or more modules stored in the above-described memory device. Examples of physical processors include, without limitation, microprocessors, microcontrollers, Central Processing Units (CPUs), Field-Programmable Gate Arrays (FPGAs) that implement softcore processors, Application-Specific Integrated Circuits (ASICs), portions of one or more of the same, variations or combinations of one or more of the same, or any other suitable physical processor.

Although illustrated as separate elements, the modules described and/or illustrated herein may represent portions of a single module or application. In addition, in certain embodiments one or more of these modules may represent one or more software applications or programs that, when executed by a computing device, may cause the computing device to perform one or more tasks. For example, one or more of the modules described and/or illustrated herein may represent modules stored and configured to run on one or more of the computing devices or systems described and/or illustrated herein. One or more of these modules may also represent all or portions of one or more special-purpose computers configured to perform one or more tasks.

In addition, one or more of the modules described herein may transform data, physical devices, and/or representations of physical devices from one form to another. For example, one or more of the modules recited herein may receive data to be transformed (e.g., eye-tracking sensor data), transform the data (e.g., into one or more of gaze direction, object viewed, or other vision parameter), output a result of the transformation to perform a function (e.g., modify an augmented reality environment, modify a real environment, modify an operational parameter of a real or virtual device, provide a control signal to an apparatus such as an electronic device, vehicle, or other apparatus), use the result of the transformation to perform a function, and store the result of the transformation to perform a function (e.g., in a memory device). Additionally or alternatively, one or more of the modules recited herein may transform a processor, volatile memory, non-volatile memory, and/or any other portion of a physical computing device from one form to another by executing on the computing device, storing data on the computing device, and/or otherwise interacting with the computing device.

In some embodiments, the term "computer-readable medium" generally refers to any form of device, carrier, or medium capable of storing or carrying computer-readable instructions. Examples of computer-readable media include, without limitation, transmission-type media, such as carrier waves, and non-transitory-type media, such as magnetic-storage media (e.g., hard disk drives, tape drives, and floppy disks), optical-storage media (e.g., Compact Discs (CDs), Digital Video Disc (DVDs), and BLU-RAY disks), electronic-storage media (e.g., solid-state drives and flash media), and other distribution systems.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the spirit and scope of the present disclosure. The embodiments disclosed herein may be considered in all respects illustrative and not restrictive. Reference may be made to any claims appended hereto and their equivalents in determining the scope of the present disclosure.

Unless otherwise noted, the terms "connected to" and "coupled to" (and their derivatives), as used in the specification and/or claims, are to be construed as permitting both direct and indirect (i.e., via other elements or components) connection. In addition, the terms "a" or "an," as used in the specification and/or claims, are to be construed as meaning "at least one of." Finally, for ease of use, the terms "including" and "having" (and their derivatives), as used in the specification and/or claims, are interchangeable with and have the same meaning as the word "comprising."

## Claims

1. An apparatus comprising:
a display;
a first lens assembly comprising a first lens and first reflector; and
a second lens assembly comprising a second lens and a second reflector;
wherein:
the first lens assembly has a front surface configured to receive display light from the display when the display is energized; and
the first lens assembly includes a Fresnel surface comprising facets and steps formed in the front surface of the first lens or in a substrate supported by the first lens.

2. The apparatus of claim 1, wherein:
the first lens assembly has a rear surface facing the second lens assembly, and
the first lens assembly further comprises an optical retarder supported by the rear surface.

3. The apparatus of claim 1 or 2, wherein:
the first lens comprises a first Fresnel lens including the Fresnel surface; and
the first lens assembly further comprises a second Fresnel lens, wherein
the first reflector is located between the first Fresnel lens and the second Fresnel lens;
preferably wherein the first reflector is disposed on the facets of the Fresnel surface of the first Fresnel lens.

4. The apparatus of any preceding claim, wherein the first reflector comprises a polarized reflector or a beamsplitter;
preferably wherein the second reflector comprises a polarized reflector or a beamsplitter.

5. The apparatus of any preceding claim, wherein the apparatus is configured so that:
the display light is transmitted through the first lens assembly;
reflected by the second reflector to the first lens assembly; and
reflected by the first reflector through the second lens assembly.

6. The apparatus of any preceding claim, wherein:
the front surface of the first lens includes a curved surface; and
the first reflector is supported by the curved surface of the first lens.

7. The apparatus of claim 6, wherein the Fresnel surface is formed in at least a portion of the curved surface; and/or wherein the Fresnel surface is formed within a central portion of the curved surface.

8. The apparatus of claim 6 or 7, wherein the curved surface is an aspheric surface.

9. The apparatus of any of claims 6 to 8, wherein the Fresnel surface is formed in a Fresnel substrate attached to the curved surface of the first lens.

10. The apparatus of claim 9, wherein the first reflector extends between the curved surface of the first lens and the Fresnel substrate adhered to the curved surface of the first lens.

11. The apparatus of claim 9 or 10, wherein:
the Fresnel substrate has a planar front surface in which the Fresnel surface is formed; and
the Fresnel substrate has a concave rear surface that conforms to the curved surface of the first lens.

12. The apparatus of any preceding claim, wherein the apparatus comprises a head-mounted device, wherein the display light forms an image at an eye of a user when the user wears the head-mounted device;
preferably wherein the head-mounted device is an augmented-reality device or a virtual-reality device.

13. A lens assembly, comprising:
a lens having a convex surface;
a reflector supported by the convex surface;
a Fresnel substrate having a concave surface that conforms to and is supported by the convex surface of the lens, and is located so that the reflector is located between the convex surface of the lens and the convex surface of the Fresnel substrate; and
a Fresnel surface formed in at least a portion of the Fresnel substrate, the Fresnel surface comprising facets and steps.

14. A method, comprising:
emitting display light from a display;
transmitting the display light through a first lens assembly comprising a Fresnel lens and a first reflector;
reflecting the display light from a second lens assembly comprising a second reflector; and
reflecting the display light from the first reflector so that the display light passes through the second lens assembly, wherein:
the first reflector is located on a plurality of facets of the Fresnel lens.

15. The method of claim 14, further comprising forming an augmented reality image or a virtual reality image using the display light.
